(19) Europäisches Patentamt
European Patent Office
Office européen des brevets

(11) **EP 4 037 272 A1**

(12) **EUROPEAN PATENT APPLICATION**
published in accordance with Art. 153(4) EPC

(43) Date of publication:
**03.08.2022 Bulletin 2022/31**

(21) Application number: **20878606.1**

(22) Date of filing: **23.10.2020**

(51) International Patent Classification (IPC):
***H04L 12/873*** (2013.01)

(52) Cooperative Patent Classification (CPC):
**H04L 12/12; H04L 47/52;** Y02D 30/50

(86) International application number:
**PCT/CN2020/123406**

(87) International publication number:
**WO 2021/078286 (29.04.2021 Gazette 2021/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.10.2019 CN 201911020020**

(71) Applicant: **Huawei Technologies Co., Ltd.
Longgang District,
Shenzhen, Guangdong
518129 (CN)**

(72) Inventors:
• **LEI, Kai**
**Shenzhen, Guangdong 518055 (CN)**
• **HUANG, Junlin**
**Zhanjiang, Guangdong 524500 (CN)**
• **ZHANG, Ye**
**Beijing 100032 (CN)**
• **SUSANTO, Hengky**
**Shenzhen, Guangdong 518129 (CN)**
• **BAI, Bo**
**Shenzhen, Guangdong 518129 (CN)**
• **ZHANG, Fan**
**Shenzhen, Guangdong 518129 (CN)**
• **ZHANG, Gong**
**Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **DATA PROCESSING METHOD AND DEVICE**

(57)    Embodiments of this application disclose a data processing method and a data processing apparatus. The method includes: obtaining first bandwidth adjustment information and a bandwidth adjustment result of all of M service flows in a first exploration period; determining second bandwidth adjustment information of all the service flows in a first decision period based on the first bandwidth adjustment information and the bandwidth adjustment result; and adjusting all the service flows based on the second bandwidth adjustment information, where the bandwidth adjustment result is obtained after all the service flows are adjusted based on the first bandwidth adjustment information, and M is an integer greater than or equal to 2. In this manner, determining of bandwidth allocation information for a plurality of service flows is facilitated.

Obtain first bandwidth adjustment information and a bandwidth adjustment result of all of M service flows in a first exploration period, where the bandwidth adjustment result is obtained after all the service flows are adjusted based on the first bandwidth adjustment information — S201

Determine second bandwidth adjustment information of all the service flows in a first decision period based on the first bandwidth adjustment information and the bandwidth adjustment result — S202

Adjust all the service flows based on the second bandwidth adjustment information — S203

FIG. 2

## Description

This application claims priority to Chinese Patent Application No. 201911020020.4, filed with the China National Intellectual Property Administration on October 24, 2019 and entitled "DATA PROCESSING METHOD AND APPARATUS THEREOF", which is incorporated herein by reference in its entirety.

## TECHNICAL FIELD

This application relates to the field of internet technologies, and in particular, to a data processing method and an apparatus thereof.

## BACKGROUND

With an increasingly changing requirement of an Internet access user and diversified development of applications, there is a phenomenon in which a plurality of data flows coexist. There are different transmission objectives for different data flows in a network transmission process. For example, a high throughput is a transmission objective of concern for data flows such as data flows in virtual reality, augmented reality, and high-definition video transmission in a network transmission process; a low latency is a transmission objective of concern for data flows such as a real-time application and communication between vehicles in an internet of vehicles in a network transmission process; and high bandwidth, a low latency, high reliability, and the like are transmission objectives of concern for a data flow of a remote video medical service in a network transmission process.

Currently, in a network in which a plurality of data flows coexist, if a bandwidth allocation method for data flows for a single transmission objective is used, differentiated transmission objectives of different data flows cannot be simultaneously achieved, resulting in relatively low network utility.

Therefore, in the network in which a plurality of data flows coexist, how to determine a bandwidth allocation solution for the plurality of data flows becomes a problem to be urgently resolved.

## SUMMARY

Embodiments of this application provide a data processing method and an apparatus thereof, to facilitate determining of bandwidth allocation information for a plurality of service flows.

According to a first aspect, an embodiment of this application provides a data processing method. The method includes: obtaining first bandwidth adjustment information and a bandwidth adjustment result of all of M service flows in a first exploration period, where the bandwidth adjustment result is obtained after all the service flows are adjusted based on the first bandwidth adjustment information, and M is an integer greater than or equal to 2; determining second bandwidth adjustment information of all the service flows in a first decision period based on the first bandwidth adjustment information and the bandwidth adjustment result; and adjusting all the service flows based on the second bandwidth adjustment information.

In this technical solution, the second bandwidth adjustment information of all the service flows in the first decision period is determined based on the first bandwidth adjustment information and the bandwidth adjustment result of all the service flows in the first exploration period, to help better determine bandwidth allocation information for all the service flows. In addition, when a plurality of service flows coexist and there are different transmission objectives of concern for the plurality of service flows, this helps improve network utility.

In an implementation, a specific implementation of determining the second bandwidth adjustment information of all the service flows in the first decision period based on the first bandwidth adjustment information and the bandwidth adjustment result may be: determining the second bandwidth adjustment information of all the service flows in the first decision period by using a machine learning algorithm based on the first bandwidth adjustment information and the bandwidth adjustment result.

In this technical solution, learning may be continuously performed in an exploration phase by using the first bandwidth adjustment information and the bandwidth adjustment result, to determine the second bandwidth adjustment information. Through periodic exploration and learning, determining of bandwidth allocation information, for the M service flows, that maximizes the network utility is facilitated.

In an implementation, the first exploration period may include N exploration time periods, the first bandwidth adjustment information may include a bandwidth adjustment parameter for each service flow in each exploration time period, the bandwidth adjustment result may include N utility value sets, an $n^{th}$ utility value set includes a utility value of each service flow in an $n^{th}$ exploration time period, N is an integer greater than or equal to 2, $1 \leq n \leq N$, $M \leq N$, the second bandwidth adjustment information includes a first bandwidth adjustment parameter and a second bandwidth adjustment parameter, the first bandwidth adjustment parameter is a bandwidth adjustment parameter for a first service flow in the first decision period, the second bandwidth adjustment parameter is a bandwidth adjustment parameter for a second service flow in the first decision period, and the M service flows include the first service flow and the second service flow; before the determining second bandwidth adjustment information of all the service flows in a first decision period based on the first bandwidth adjustment information and the bandwidth adjustment result, the method may further include: determining the first service flow based on the N utility value sets; and a specific implementation of adjusting all the service flows based on the second bandwidth adjustment information may be: adjusting the first service flow based on the first bandwidth adjustment parameter, and adjusting the second service flow based on the second bandwidth adjustment parameter.

In this technical solution, the first service flow is determined based on the N utility value sets, and bandwidth of the first service flow is further increased, to help maximize the network utility.

In an implementation, a specific implementation of determining the first service flow based on the N utility value sets may be: determining a first exploration time period from the N exploration time periods, where the first exploration time period corresponds to a first utility value set in the N utility value sets, and a sum of all utility values in the first utility value set is greater than a sum of all utility values in any utility value set other than the first utility value set in the N utility value sets; obtaining bandwidth adjustment parameters for all the service flows in the first exploration time period; and using a service flow corresponding to a maximum value in the bandwidth adjustment parameters for all the service flows in the first exploration time period as the first service flow.

In this technical solution, the first exploration time period is determined from the N exploration time periods, and the service flow corresponding to the maximum value in the bandwidth adjustment parameters for all the service flows in the first exploration time period is used as the first service flow, to further increase the bandwidth of the first service flow, to help maximize the network utility.

In an implementation, a specific implementation of determining the second bandwidth adjustment information of all the service flows in the first decision period based on the first bandwidth adjustment information and the bandwidth adjustment result may be: determining the first bandwidth adjustment parameter and the second bandwidth adjustment parameter based on a utility value of the first service flow in the first exploration time period and a bandwidth adjustment parameter for the first service flow in the first exploration time period.

In an implementation, a specific implementation of determining the first bandwidth adjustment parameter and the second bandwidth adjustment parameter based on the utility value of the first service flow in the first exploration time period and the bandwidth adjustment parameter for the first service flow in the first exploration time period may be: determining the first bandwidth adjustment parameter based on the utility value of the first service flow in the first exploration time period and the bandwidth adjustment parameter for the first service flow in the first exploration time period; and determining the second bandwidth adjustment parameter based on the first bandwidth adjustment parameter.

In an implementation, a specific implementation of determining the first bandwidth adjustment parameter based on the utility value of the first service flow in the first exploration time period and the bandwidth adjustment parameter for the first service flow in the first exploration time period may be: determining a first value based on the utility value of the first service flow in the first exploration time period and the bandwidth adjustment parameter for the first service flow in the first exploration time period; and if the first value is less than or equal to a preset threshold, using the first value as the first bandwidth adjustment parameter.

In this technical solution, if the first service flow is adjusted based on the first bandwidth adjustment parameter that is greater than the first value, efficiency of maximizing the network utility may be reduced, or the network utility may not be maximized. In this embodiment of this application, when the first value is less than or equal to the preset threshold, the first value is used as the first bandwidth adjustment parameter, and the first service flow is adjusted based on the first bandwidth adjustment parameter, to help ensure that the network utility is maximized.

In an implementation, the method may further include: if the first value is greater than the preset threshold, using the preset threshold as the first bandwidth adjustment parameter.

In this technical solution, this helps ensure that the network utility is maximized.

In an implementation, the first value may be determined based on a second value and a third value; the second value may be a difference between the utility value of the first service flow in the first exploration time period and a utility value of the first service flow in any exploration time period other than the first exploration time period in the N exploration time periods; and the third value may be a difference between the bandwidth adjustment parameter for the first service flow in the first exploration time period and a bandwidth adjustment parameter for the first service flow in the any exploration time period other than the first exploration time period in the N exploration time periods.

In an implementation, a specific implementation of adjusting the first service flow based on the first bandwidth adjustment parameter, and adjusting the second service flow based on the second bandwidth adjustment parameter may be: adjusting bandwidth allocation information, in first bandwidth allocation information, for the first service flow based on the first bandwidth adjustment parameter, and adjusting bandwidth allocation information, in the first bandwidth allocation information, for the second service flow based on the second bandwidth adjustment parameter. The first bandwidth allocation information is bandwidth allocation information for the M service flows in a second decision period.

In an implementation, after the first bandwidth adjustment information and the bandwidth adjustment result of all of the M service flows in the first exploration period are obtained, the method may further include: obtaining a reference utility sum in the first decision period, where the reference utility sum in the first decision period is a sum of utility values of the M service flows in the second decision period; and if a sum of all utility values in at least one of the N utility value sets is greater than or equal to the reference utility sum, triggering execution of the step of determining the first service flow based on the N utility value sets.

In this technical solution, a case in which the bandwidth allocation information for the M service flows is adjusted when the network utility of a network is already maximized in the second decision period (the second decision period may be a previous decision period of the first decision period), in other words, when the bandwidth allocation information for the M service flows does not need to be adjusted, may be avoided.

In an implementation, the method may further include: if a sum of all utility values in each of the N utility value sets is less than the reference utility sum, obtaining the bandwidth allocation information for the M service flows in the second decision period; and using the bandwidth allocation information as bandwidth allocation information for the M service flows in the first decision period.

In an implementation, the method may further include: determining a type of a time period to which a current time belongs, where the type includes an exploration type or a decision type, and each decision period includes one or more decision time periods; and if the type of the time period to which the current time belongs is the decision type, triggering the step of obtaining first bandwidth adjustment information and a bandwidth adjustment result of all of M service flows in a first exploration period.

In an implementation, the method may further include: if the type of the time period to which the current time belongs is the exploration type, determining a bandwidth adjustment parameter for each service flow in a second exploration time period, where the second exploration time period is an exploration time period to which the current time belongs in the first exploration period; adjusting bandwidth allocation information, in the first bandwidth allocation information, for each service flow based on the bandwidth adjustment parameter for each service flow in the second exploration time period, to obtain second bandwidth allocation information, where the first bandwidth allocation information is the bandwidth allocation information for the M service flows in the second decision period, and the second bandwidth allocation information is bandwidth allocation information for the M service flows in the second exploration time period; and scheduling, in the second exploration time period based on the second bandwidth allocation information, data packets that belong to the M service flows.

In an implementation, the method may further include: if the type of the time period to which the current time belongs is the exploration type, obtaining a utility function of each of the M service flows, and obtaining an average rate of the service flow in a second exploration time period; determining a function value of the utility function of the service flow in the second exploration time period based on the average rate of the service flow in the second exploration time period; and using the function value of the utility function of the service flow in the second exploration time period as a utility value of the service flow in the second exploration time period.

In an implementation, there may be different utility functions for different service flows.

According to a second aspect, an embodiment of this application provides a data processing apparatus. The data processing apparatus is a network device or an apparatus (for example, a chip) that has a function of a network device. The apparatus has a function of implementing the data processing method provided in the first aspect, and the function is implemented by hardware or by executing corresponding software by hardware. The hardware or the software includes one or more modules corresponding to the function.

According to a third aspect, an embodiment of this application provides another data processing apparatus. The data processing apparatus is a network device or an apparatus (for example, a chip) that has a function of a network device. The data processing apparatus includes a memory and a processor. The memory stores program instructions. The processor invokes the program instructions stored in the memory, to implement the data processing method provided in the first aspect.

According to a fourth aspect, an embodiment of this application provides a computer-readable storage medium, configured to store computer program instructions to be used by the data processing apparatus described in the second aspect. The computer program instructions include a program used to perform the method in the first aspect.

According to a fifth aspect, an embodiment of this application provides a computer program product. The program product includes a program, and when the program is executed by a data processing apparatus, the data processing apparatus is enabled to implement the method described in the first aspect.

**BRIEF DESCRIPTION OF DRAWINGS**

FIG. 1 is a schematic diagram of an architecture of a communications system according to an embodiment of this application;

FIG. 2 is a schematic flowchart of a data processing method according to an embodiment of this application;

FIG. 3a is a schematic flowchart of another data processing method according to an embodiment of this application;

FIG. 3b is a schematic diagram of a structure of a control period according to an embodiment of this application;

FIG. 4 is a schematic flowchart of still another data processing method according to an embodiment of this application;

FIG. 5A and FIG. 5B are a schematic flowchart of still another data processing method according to an embodiment of this application;

FIG. 6a(1) and FIG. 6a(2) are a schematic flowchart of still another data processing method according to an embodiment of this application;

FIG. 6b is a schematic diagram of a packet header of a data packet received by a network device according to an embodiment of this application;

FIG. 6c is a schematic diagram of a network topology according to an embodiment of this application;

FIG. 6d is a schematic diagram of a throughput of a bottleneck link in a network shown in FIG. 6c according to an embodiment of this application;

FIG. 6e is a schematic diagram of actual traffic obtained after a data packet is scheduled based on determined bandwidth allocation information according to an embodiment of this application;

FIG. 6f is a schematic diagram of another network topology according to an embodiment of this application;

FIG. 6g is a comparison diagram of average bandwidth utilization that is of all links in a network shown in FIG. 6f and that exists when a data processing method provided in embodiments of this application and DCTCP are used according to an embodiment of this application;

FIG. 6h is a comparison diagram of network utility that is correspondingly generated in a network topology shown in FIG. 6f and that exists when a data processing method provided in embodiments of this application and DCTCP are used according to an embodiment of this application;

FIG. 7 is a schematic diagram of a structure of a data processing apparatus according to an embodiment of this application; and

FIG. 8 is a schematic diagram of a structure of another data processing apparatus according to an embodiment of this application.

## DESCRIPTION OF EMBODIMENTS

To better understand a data processing method disclosed in embodiments of this application, a communications system applicable to embodiments of this application is first described below.

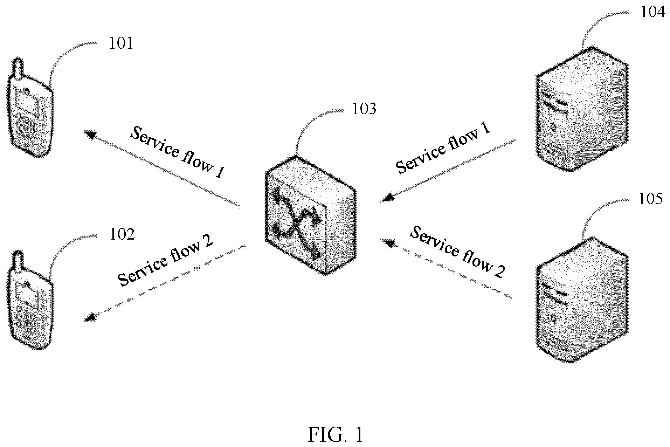

FIG. 1 is a schematic diagram of an architecture of a communications system according to an embodiment of this application. As shown in FIG. 1, the communications system includes a first terminal device 101, a second terminal device 102, a network device 103, a first service device 104, and a second service device 105.

Each of the first service device 104 and the second service device 105 may provide a service for the terminal device. For example, the terminal device may obtain a data resource from the first service device 104 (or the second service device 105). It should be noted that a service flow to which data obtained by the terminal device from the first service device 104 belongs is different from a service flow to which data obtained from the second service device 105 belongs. One service flow may include one or more data flows. In other words, a plurality of data flows on a same link may be aggregated into one service flow. There is a same transmission objective of concern in a transmission process for different data flows that belong to a same service flow, and there are different transmission objectives of concern in a transmission process for different data flows that belong to different service flows. For example, a high throughout is a transmission objective of concern for a service flow 1 in a transmission process, and a low latency is a transmission objective of concern for a service flow 2 in a transmission process.

Specifically, when needing a service provided by the first service device 104, the first terminal device 101 may generate a request 1, and send the request 1 to the first service device 104. After receiving the request 1, the first service device 104 may respond to the request 1, that is, send a service flow 1 requested in the request 1 to the network device 103. Similarly, when needing a service provided by the second service device 105, the second terminal device 102 may generate a request 2, and send the request 2 to the second service device 105. After receiving the request 2, the second service device 105 may respond to the request 2, that is, send a service flow 2 requested in the request 2 to the network device 103.

When receiving the service flow 1 and the service flow 2, the network device 103 may obtain first bandwidth adjustment information and a bandwidth adjustment result of the service flow 1 and the service flow 2 in a first exploration period, determine second bandwidth adjustment information of the service flow 1 and the service flow 2 in a first decision period based on the first bandwidth adjustment information and the bandwidth adjustment result, and adjust the service flow 1 and the service flow 2 based on the second bandwidth adjustment information. Further, the network device 103 may determine bandwidth allocation information for the service flow 1 and the service flow 2 based on the adjustment result, and then schedule, based on the bandwidth allocation information, a data packet that belongs to the service flow 1 and a data packet that belongs to the service flow 2, to send the data packet that belongs to the service flow 1 to the first terminal device 101, and send the data packet that belongs to the service flow 2 to the second terminal device 102. The bandwidth adjustment result is obtained after the service flow 1 and the service flow 2 are adjusted based on the first bandwidth adjustment information.

In this embodiment of this application, each control period may include an exploration period and a decision period. The network device 103 adjusts the bandwidth allocation information for the service flow 1 and the service flow 2 in the first exploration period based on the first bandwidth adjustment information, to obtain the bandwidth adjustment result. The bandwidth adjustment result may be used to represent network utility of an entire network that exists after the bandwidth allocation information for the service flow 1 and the service flow 2 is adjusted based on the first bandwidth adjustment information. Therefore, the network device 103 determines the second bandwidth adjustment information based on the first bandwidth adjustment information and the bandwidth adjustment result, and adjusts the service flow 1 and the service flow 2 based on the second bandwidth adjustment information. This helps better determine bandwidth allocation information for a plurality of service flows, and helps improve the network utility. The network utility may refer to satisfaction of a user that exists after network bandwidth is allocated to the network user. For example, when a high throughout is a transmission objective of concern for the service flow 1 in a transmission process, and a low latency is a transmission objective of concern for the service flow 2 in a transmission process, a user corresponding to the first terminal device 101 may generate, based on a return rate of the service flow 1, corresponding satisfaction with bandwidth allocated by the network device 103 to the service flow 1. Similarly, a user corresponding to the second terminal device 102 may generate, based on a return time of the service flow 2, corresponding satisfaction with bandwidth allocated by the network device 103 to the service flow 2. In this case, the network utility may be an average value between the satisfaction generated by the user corresponding to the first terminal device 101 and the satisfaction generated by the user corresponding to the second terminal device 102.

Each of the first terminal device 101 and the second terminal device 102 is an entity, on a user side, configured to receive or send a signal, for example, a mobile phone. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart television, a wearable device, a tablet (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in embodiments of this application.

The network device 103 may be a device with a forwarding function. Specifically, the network device 103 may be a router, a switch, or another device.

Each of the first service device 104 and the second service device 105 may include a processor, a memory, and a network interface. Specifically, each of the first service device 104 and the second service device 105 may be a server. In this embodiment of this application, each of the first service device 104 and the second service device 105 may be a data server.

It should be noted that the network device 103 in the communications system corresponding to this embodiment of this application may receive M service flows. A case in which the network device 103 in the communications system shown in FIG. 1 receives two service flows is merely used as an example, and constitutes no limitation on this embodiment of this application. In another feasible implementation, a specific value of M may alternatively be 3, 4, 5, or another value.

It should be further noted that in the communications system shown in FIG. 1, a case in which each of the first terminal device 101 and the second terminal device 102 obtains only one service flow, and the first terminal device 101 and the second terminal device 102 obtain different service flows is merely used as an example, and constitutes no limitation on this embodiment of this application. In another feasible implementation, one terminal device may obtain a plurality of service flows, and different terminal devices may obtain a same service flow. In addition, in the communications system shown in FIG. 1, a case in which each of the first service device 104 and the second service device 105 sends one service flow to the terminal device, and the first service device 104 and the second service device 105 send different service flows is merely used as an example, and constitutes no limitation on this embodiment of this application. In another feasible implementation, one service device may send a plurality of service flows, and different service devices may send a same service flow. It should be further noted that a case in which the communications system shown in FIG. 1 includes two terminal devices and two service devices is merely used as an example, and constitutes no limitation on this embodiment of this application. In another feasible implementation, the communications system may alternatively include one terminal device, three terminal devices, or another quantity of terminal devices, and the communications system may alternatively include one service device, three service devices, or another quantity of service devices.

It may be understood that the communications system described in embodiments of this application is intended to describe the technical solutions in embodiments of this application more clearly, but does not constitute a limitation on the technical solutions provided in embodiments of this application. A person of ordinary skill in the art may learn that, with evolution of a system architecture and emergence of a new service scenario, the technical solutions provided in embodiments of this application are also applicable to a similar technical problem.

A data processing method and a data processing apparatus provided in this application are described below in detail with reference to the accompanying drawings.

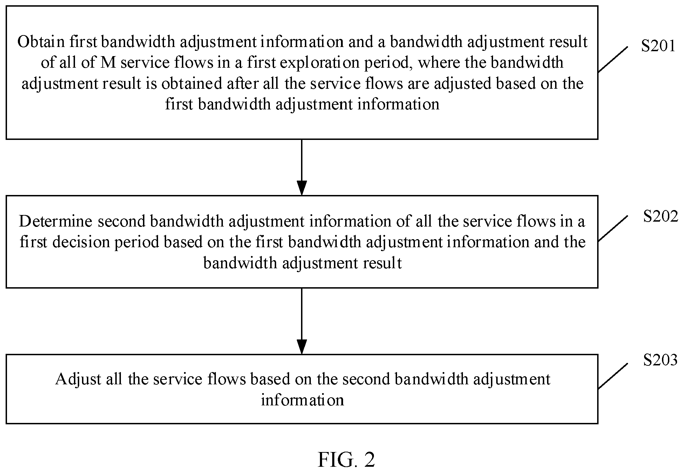

FIG. 2 is a schematic flowchart of a data processing method according to an embodiment of this application. Step S201 to step S203 are performed by a network device or a chip in a network device. Description is provided below by using an example in which the data processing method is performed by the network device. As shown in FIG. 2, the method may include but is not limited to the following steps.

Step S201: The network device obtains first bandwidth adjustment information and a bandwidth adjustment result of all of M service flows in a first exploration period, where the bandwidth adjustment result is obtained after all the service flows are adjusted based on the first bandwidth adjustment information.

M may be an integer greater than or equal to 2. Each of the M service flows may include one or more data flows. There is a same transmission objective of concern in a transmission process for a plurality of data flows that belong to a same service flow, and there are different transmission objectives of concern in a transmission process for data flows that belong to different service flows. When there is a same transmission objective of concern in a transmission process for a plurality of data flows received by the network device, the network device may aggregate the plurality of data flows into one service flow.

In this embodiment of this application, each control period may include an exploration period and a decision period, and in a same control period, a time occupied by an exploration period is earlier than a time occupied by a decision period. The first bandwidth adjustment information may indicate an adjustment made by the network device to first bandwidth allocation information in the first exploration period. The first exploration period may be a current exploration period. The first bandwidth allocation information may be bandwidth allocation information for the M service flows in a second decision period (namely, a decision period in a previous control period). The second decision period may be a previous decision period of a first decision period. A first control period includes the first exploration period and the first decision period, and a second control period includes a second exploration period and the second decision period. The first control period may be a current control period, and the second control period is a previous control period of the current control period. Bandwidth allocation information may include a bandwidth value allocated by the network device to each of the M service flows or a bandwidth allocation proportion of each of the M service flows. The first bandwidth adjustment information may include bandwidth by using which adjustment is made for each service flow based on the first bandwidth allocation information. For example, if total bandwidth of the network device is 3 Gbps, a value of M is 3, and bandwidth (namely, the first bandwidth allocation information) allocated by the network device to each of the three service flows, namely, a service flow 1, a service flow 2, and a service flow 3, is 1 Gbps, the first bandwidth adjustment information may be 0.2 Gbps, -0.1 Gbps, and -0.1 Gbps. In this case, the first bandwidth adjustment information indicates that based on the first bandwidth allocation information, the network device increases bandwidth of the service flow 1 by 0.2 Gbps, and decreases bandwidth of each of the service flow 2 and the service flow 3 by 0.1 Gbps in the first exploration period.

The bandwidth adjustment result may be used to represent network utility obtained after data packets of the M service flows are scheduled based on adjusted bandwidth allocation information obtained after the first bandwidth allocation information is adjusted based on the first bandwidth adjustment information. The network utility may refer to satisfaction of a user that exists after network bandwidth is allocated to the network user. Specifically, the bandwidth adjustment result may include a utility value of each of the M service flows in the first exploration period. The utility value of each service flow in the first exploration period may be used to measure satisfaction of the network user with bandwidth allocated by the network device to the service flow in the first exploration period.

In an implementation, an electronic device (for example, a terminal device or a service device) that generates a data packet may add a field to a packet header of the data packet, and indicate a transmission objective of concern for the data packet in a transmission process by using the added field. Correspondingly, when receiving the data packet, the network device may determine the transmission objective of concern for the data packet in the transmission process by using information recorded in the field added to the packet header of the data packet, and then aggregate data packets for a same transmission objective into a same service flow. In an implementation, the network device may control data packets that belong to a same service flow to enter a same queue, and control data packets that belong to different service flows to enter different queues. Each queue is an independent and isolated queue. In this way, a case in which data packets in different queues interfere with each other in a data packet scheduling process may be avoided. After data packets that belong to different service flows are controlled to enter different queues, scheduling oriented to a single transmission objective may be implemented for a data packet in each queue. In this manner, a process of scheduling a data packet by the network device may be simplified. It should be noted that the network device may invoke, through a public interface, an existing or redesigned flow control method oriented to the single transmission objective, and apply the method to each queue to schedule a data packet. In other words, in this embodiment of this application, compatibility with the existing or redesigned flow control method oriented to the single transmission objective may be implemented.

In an implementation, the added field may be placed in a first data field in an optional field of the packet header. It should be noted that in addition to an identifier of the transmission objective of concern for the data packet in the transmission process, other information may be further recorded in the first data field. This is not limited in this embodiment of this application.

Step S202: The network device determines second bandwidth adjustment information of all the service flows in the first decision period based on the first bandwidth adjustment information and the bandwidth adjustment result.

Specifically, after obtaining the first bandwidth adjustment information and the bandwidth adjustment result of all of the M service flows in the first exploration period, the network device may determine the second bandwidth adjustment information of all the service flows in the first decision period based on the first bandwidth adjustment information and the bandwidth adjustment result, and then adjust all of the M service flows based on the second bandwidth adjustment information.

The first exploration period corresponding to the first bandwidth adjustment information and the first decision period corresponding to the second bandwidth adjustment information belong to a same control period. In a same control period, a time occupied by an exploration period is earlier than a time occupied by a decision period. Therefore, the network device determines the second bandwidth adjustment information of all the service flows in the first decision period based on the first bandwidth adjustment information and the bandwidth adjustment result of all the service flows in the first exploration period, to help better determine bandwidth allocation information for all the service flows. In addition, when a plurality of service flows coexist and there are different transmission objectives of concern for the plurality of service flows, this helps simultaneously achieve differentiated transmission objectives of all the service flows, to help improve the network utility.

For example, if the total bandwidth of the network device is 3 Gbps, the value of M is 3, and the bandwidth (namely, the first bandwidth allocation information) allocated by the network device to each of the three service flows, namely, the service flow 1, the service flow 2, and the service flow 3, is 1 Gbps, the first bandwidth adjustment information is 0.2 Gbps, -0.1 Gbps, and -0.1 Gbps, network utility included in the bandwidth adjustment result is 10, and network utility obtained after data packets that belong to the three service flows are scheduled based on the first bandwidth allocation information in the second decision period is 8. It may be learned that the network utility is improved after the three service flows are adjusted by using the first bandwidth adjustment information. In other words, the network utility may be improved after the bandwidth of the service flow 1 is increased and the bandwidth of each of the service flow 2 and the service flow 3 is correspondingly decreased. In this case, the second bandwidth adjustment information determined by the network device based on the first bandwidth adjustment information and the bandwidth adjustment result may be 0.4 Gbps, -0.2 Gbps, and -0.2 Gbps. The second bandwidth adjustment information indicates that the bandwidth allocated to the service flow 1 is further increased based on the first bandwidth adjustment information, to help further improve the network utility.

It should be noted that a case in which when the bandwidth of the service flow 1 is increased, bandwidth of the service flow 2 and bandwidth of the service flow 3 are decreased by an equal proportion (in other words, the second bandwidth adjustment information is 0.4 Gbps, -0.2 Gbps, and -0.2 Gbps) is merely used as an example, and constitutes no limitation on this embodiment of this application. In another feasible implementation, when the bandwidth of the service flow 1 is increased, the bandwidth of the service flow 2 and the bandwidth of the service flow 3 may be alternatively decreased by different proportions. For example, the second bandwidth adjustment information may alternatively be 0.4 Gbps, -0.15 Gbps, and -0.25 Gbps.

For another example, if the total bandwidth of the network device is 3 Gbps, the value of M is 3, and the bandwidth (namely, the first bandwidth allocation information) allocated by the network device to each of the three service flows, namely, the service flow 1, the service flow 2, and the service flow 3, is 1 Gbps, the first bandwidth adjustment information is 0.2 Gbps, -0.1 Gbps, and -0.1 Gbps, network utility included in the bandwidth adjustment result is 10, and network utility obtained after data packets that belong to the three service flows are scheduled based on the first bandwidth allocation information in the second decision period is 12. It may be learned that the network utility is reduced after the three service flows are adjusted by using the first bandwidth adjustment information. In other words, the network utility is reduced after the bandwidth of the service flow 1 is increased and the bandwidth of each of the service flow 2 and the service flow 3 is correspondingly decreased. In this case, the second bandwidth adjustment information determined by the network device based on the first bandwidth adjustment information and the bandwidth adjustment result may be -0.2 Gbps, 0.1 Gbps, and 0.1 Gbps. The network utility is reduced after the bandwidth of the service flow 1 is increased, and the bandwidth of each of the service flow 2 and the service flow 3 is correspondingly decreased. Therefore, there is a relatively high probability that the network utility can be improved if the bandwidth of the service flow 1 is decreased, and the bandwidth of each of the service flow 2 and the service flow 3 is correspondingly increased. In other words, all the service flows are adjusted based on the second bandwidth adjustment information, to help improve the network utility.

In an implementation, a specific implementation of determining, by the network device, the second bandwidth adjustment information of all the service flows in the first decision period based on the first bandwidth adjustment information and the bandwidth adjustment result may be: determining the second bandwidth adjustment information of all the service flows in the first decision period by using a machine learning algorithm based on the first bandwidth adjustment information and the bandwidth adjustment result. Specifically, the network device may use the first bandwidth adjustment information and the bandwidth adjustment result as inputs of the machine learning algorithm, and use an output of the machine learning algorithm as the second bandwidth adjustment information. In an implementation, the machine learning algorithm may be specifically an online learning algorithm. In this manner, the network device may continuously perform learning in an exploration phase by using the first bandwidth adjustment information and the bandwidth adjustment result, to determine the second bandwidth adjustment information. In addition, the second bandwidth adjustment information meets the following condition: Relatively high network utility is obtained after the data packets that belong to all the service flows are scheduled based on bandwidth allocation information that is for all the service flows and that is obtained after all the service flows are adjusted based on the second bandwidth adjustment information. Through periodic exploration and learning, the network device may determine bandwidth allocation information, for the M service flows, that maximizes the network utility.

There is relatively great uncertainty for a start time of network traffic, and there is burst traffic that is difficult to predict in a network. An online learning-based data processing method may not depend on a specific flow model. Therefore, in the online learning-based data processing method provided in this embodiment of this application, a capability of compatibility with a complex traffic model and application diversity can be improved.

Step S203: The network device adjusts all the service flows based on the second bandwidth adjustment information.

Specifically, after determining the second bandwidth adjustment information of all the service flows in the first decision period, the network device may adjust all the service flows based on the second bandwidth adjustment information, to obtain the bandwidth allocation information for all the service flows, and schedule, based on the bandwidth allocation information, the data packets that belong to all the service flows.

For example, if the total bandwidth of the network device is 3 Gbps, the value of M is 3, and the bandwidth (namely, the first bandwidth allocation information) allocated by the network device to each of the three service flows, namely, the service flow 1, the service flow 2, and the service flow 3, is 1 Gbps, the second bandwidth adjustment information may be 0.4 Gbps, -0.2 Gbps, and -0.2 Gbps. In this case, that the network device adjusts the three service flows based on the second bandwidth adjustment information may specifically include: The network device determines, based on the second bandwidth adjustment information, that bandwidth allocated to the service flow 1, the service flow 2, and the service flow 3 is 1.4 Gbps, 0.8 Gbps, and 0.8 Gbps, and then schedule, based on the bandwidth allocated to all the service flows, data packets that belong to all the service flows.

In this embodiment of this application, the second bandwidth adjustment information of all the service flows in the first decision period is determined based on the first bandwidth adjustment information and the bandwidth adjustment result of all the service flows in the first exploration period, to help better determine the bandwidth allocation information for all the service flows. In addition, when a plurality of service flows coexist and there are different transmission objectives of concern for the plurality of service flows, this helps simultaneously achieve differentiated transmission objectives of all the service flows, to help improve the network utility.

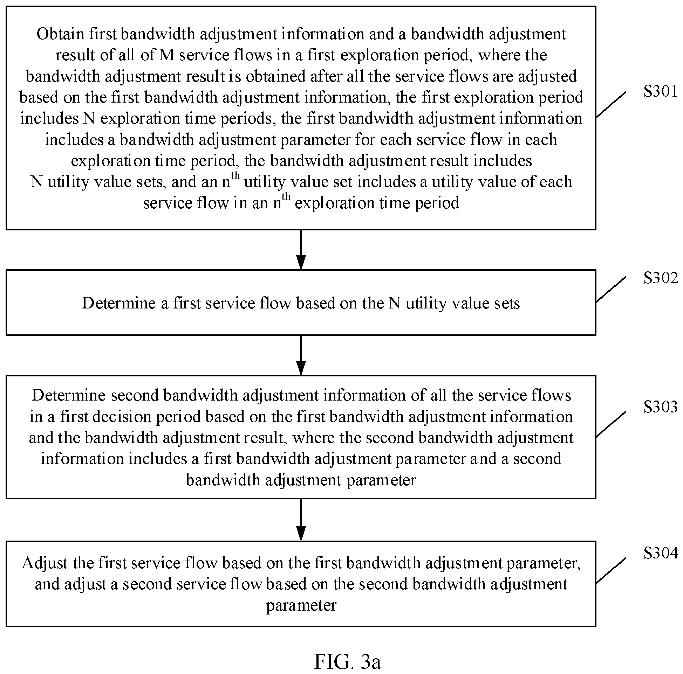

FIG. 3a is a schematic flowchart of another data processing method according to an embodiment of this application. In the method, how to determine a bandwidth adjustment parameter for a first service flow and a bandwidth adjustment parameter for a second service flow in a first decision period is described in detail based on a bandwidth adjustment parameter for each service flow in each exploration time period and N utility value sets. Step S301 to step S304 are performed by a network device or a chip in a network device. Description is provided below by using an example in which the data processing method is performed by the network device. The method may include but is not limited to the following steps.

Step S301: The network device obtains first bandwidth adjustment information and a bandwidth adjustment result of all of M service flows in a first exploration period, where the bandwidth adjustment result is obtained after all the service flows are adjusted based on the first bandwidth adjustment information, the first exploration period includes N exploration time periods, the first bandwidth adjustment information includes the bandwidth adjustment parameter for each service flow in each exploration time period, the bandwidth adjustment result includes the N utility value sets, and an $n^{th}$ utility value set includes a utility value of each service flow in an $n^{th}$ exploration time period.

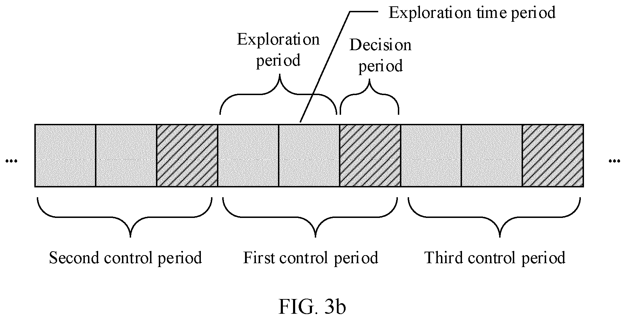

In this embodiment of this application, duration of the exploration time periods may be the same, and adjacent exploration time periods may be consecutive. In an implementation, a decision period in each control period may include one or more decision time periods. Duration of the decision time periods may be the same, and adjacent decision time periods may be consecutive. Optionally, the duration of the decision time period and the duration of the exploration time period may be the same, or the duration of the decision time period may be greater than the duration of the exploration time period. In a control period, an exploration period and a decision period are consecutive in time. A schematic diagram of a structure of a control period shown in FIG. 3b is used as an example. A second control period is a previous control period of a first control period, and a third control period is a next control period of the first control period. In FIG. 3b, each control period includes an exploration period and a decision period, each exploration period includes two exploration time periods (namely, squares filled with gray in FIG. 3b), and each decision period includes one decision time period (namely, a square filled with oblique lines in FIG. 3b).

In this embodiment of this application, data packets may be grouped into different service flows based on different transmission objectives of concern for the data packets in a transmission process. M and N may be integers greater than or equal to 2, $1 \leq n \leq N$, and $M \leq N$. In an implementation, the network device may determine, based on a quantity (namely, M) of service flows transmitted in a network, a quantity (namely, N) of exploration time periods included in each exploration period. For example, when M=3, N may be 3 or another value greater than 3. In an implementation, exploration periods include a same quantity of exploration time periods, and decision periods include a same quantity of decision time periods. When the quantity of exploration time periods included in each exploration period is greater than or equal to the quantity of service flows transmitted in the network (in other words, $N \geq M$), the network device may increase bandwidth of a different service flow (and correspondingly decrease bandwidth of another service flow) in each exploration time period based on first bandwidth allocation information, and then determine, based on a utility value of each service flow in each exploration time period, a specific service flow whose bandwidth is to be increased and another specific service flow whose bandwidth is to be correspondingly decreased, to help maximize network utility. It should be noted that network utility in an exploration time period may be a sum of utility values of all the service flows in the exploration time period.

A utility value of a service flow in an exploration time period may be determined based on a utility function of the service flow. Specifically, the network device may use a function value of a utility function of a service flow in an exploration time period as a utility value of the service flow in the exploration time period. The utility function is used to quantify utility of the service flow. In this embodiment of this application, the utility function may be a function in which an average rate of the service flow is used as an independent variable. When there are different transmission objectives of concern for different service flows in a transmission process, there may be different forms of utility functions for the different service flows. In Table 1, a specific form that is of a utility function U(x) of a service flow and that exists when a transmission objective of concern for the service flow in a transmission process is each of the following parameters, namely, proportional fairness, $\alpha$ fairness, and minimization of a flow completion time, is described. In Table 1, x is an average rate of the service flow, $\alpha$ is a parameter for $\alpha$ fairness, and $s_f$ is a size of the service flow.

**Table 1**

| Transmission objective of concern for the service flow in the transmission process | Utility function |
|---|---|
| Proportional fairness | $U(x) = \log(x)$ |
| $\alpha$ fairness | $U(x) = x^{1-\alpha}/1 - \alpha$ |
| Minimization of the flow completion time | $U(x) = x^{1-\alpha}/s_f$ |

It should be noted that the form of the utility function in Table 1 is merely used as an example, and constitutes no limitation on this embodiment of this application. In another feasible implementation, the utility function of the service flow may alternatively be in another form based on the transmission objective of concern for the service flow in the transmission process.

The bandwidth adjustment parameter for each service flow in each exploration time period is a bandwidth increase parameter or a bandwidth decrease parameter for the service flow in the exploration time period based on bandwidth, in the first bandwidth allocation information, allocated to the service flow. For example, when M=N=3, and bandwidth (namely, the first bandwidth allocation information) allocated by the network device to each of the three service flows, namely, a service flow 1, a service flow 2, and a service flow 3, is 1 Gbps, if the network device increases bandwidth of a different service flow in each exploration time period, bandwidth adjustment parameters for the service flow 1 in the three exploration time periods are respectively 0.2 Gbps, -0.1 Gbps, and -0.1 Gbps, bandwidth adjustment parameters for the service flow 2 in the three exploration time periods are respectively - 0.1 Gbps, 0.2 Gbps, and -0.1 Gbps, and bandwidth adjustment parameters for the service flow 3 in the three exploration time periods are respectively -0.1 Gbps, -0.1 Gbps, and 0.2 Gbps, it indicates that the network device increases bandwidth of the service flow 1 in a first exploration time period, increases bandwidth of the service flow 2 in a second exploration time period, and increases bandwidth of the service flow 3 in a third exploration time period. It should be noted that the bandwidth adjustment parameter may include a bandwidth value by using which adjustment is made or a bandwidth proportion by using which adjustment is made. In the example, the bandwidth adjustment parameter is a bandwidth value by using which adjustment is made. However, this constitutes no limitation on this embodiment of this application.

In an implementation, when M<N, the network device may increase bandwidth of at least one service flow and correspondingly decrease bandwidth of another service flow in each exploration time period, and the network device increases bandwidth of different service flows in different exploration time periods. For example, the network device increases bandwidth of each of a service flow 1 and a service flow 2 in a first exploration time period, and increases bandwidth of each of the service flow 2 and a service flow 3 in a second exploration time period. In this manner, it may be more quickly determined that bandwidth of a specific service flow may be increased, to maximize the network utility, in other words, to help improve efficiency of maximizing the network utility.

In this embodiment of this application, how to maximize the network utility may be divided into two sub-problems: a first sub-problem of how to allocate bandwidth to different service flows to maximize the network utility and a second sub-problem of how to implement, under a specific bandwidth constraint, data packet scheduling oriented to a single transmission objective, in other words, how to schedule, under the specific bandwidth constraint, a data packet that belongs to each service flow. Therefore, how to maximize the network utility may be defined by using the following formula:

$$\text{maximize } \sum_n U_n\left(X_n^p\right), \text{ subject to } \sum_n X_n^p \le C_p, \forall p, \ \sum_i x_i^n \le X_n^p, \forall n$$

Herein, $U_n$ represents a utility function, $X_n^p$ represents total bandwidth allocated to a service flow n on a link p, $C_p$ represents a link bandwidth capacity on the link p, $x_i^n$ represents bandwidth allocated, on the link p, to each data flow that constitutes the service flow n, and i represents a number of each data flow that constitutes the service flow n. Based on the formula, determining how to maximize the network utility may be considered as a convex optimization problem. Convex optimization is a subfield of mathematical optimization, and studies a problem of minimizing a convex function defined in a convex set.

In an implementation, the network device may include two logical architectures: a slow control layer and a fast control layer. The slow control layer may be used to resolve the first problem obtained by dividing the problem of how to maximize the network utility. That is, the slow control layer may control bandwidth allocation at a coarse granularity, to ensure optimality of a bandwidth allocation result on a relatively large time scale, to maximize the network utility. The fast control layer may be used to resolve the second problem obtained by dividing the problem of how to maximize the network utility. That is, the fast control layer may control bandwidth allocation at a fine granularity, to ensure, on a relatively small time scale, that a data packet can be quickly responded to and scheduled. Briefly, the slow control layer may determine bandwidth allocation information for all the service flows at a start time of a time period, and then transmit the bandwidth allocation information to the fast control layer, so that the fast control layer may schedule, in the time period based on the bandwidth allocation information, the data packets that belong to all the service flows.

In this embodiment of this application, the network device may determine a bandwidth adjustment parameter for each service flow in an exploration time period at a start time of the exploration time period, then determine bandwidth allocation information for the M service flows in the exploration time period based on the bandwidth adjustment parameter and the first bandwidth allocation information, and schedule, based on the bandwidth allocation information, a data packet that belongs to each service flow, so that actual network traffic matches the bandwidth allocation information. Further, the network device may quantify transmission performance in the exploration time period into a utility value at an end time of the exploration time period by using a utility function of each service flow, and group M determined utility values into a utility value set. There is a one-to-one correspondence between the utility value set and the exploration time period.

It should be noted that for a remaining process of performing step S301, refer to the specific description of step S201 in FIG. 2. Details are not described herein.

Step S302: The network device determines the first service flow based on the N utility value sets.

The M service flows may include the first service flow and the second service flow. The network device may determine, based on the bandwidth adjustment parameter for each service flow in each exploration time period and the N utility value sets, that maximization of the network utility is facilitated if bandwidth of the first service flow is increased, and bandwidth of the second service flow is correspondingly decreased, or bandwidth of the second service flow is kept unchanged. In an implementation, there may be one or more first service flows and one or more second service flows, and a sum of quantities of first service flows and second service flows is M. If the quantity of first service flows is a, and the quantity of second service flows is b, when M=N, a= 1, and b=M-1; or when M<N, a ≥1, and b=M - a. It should be noted that when there are a plurality of second service flows, there may be a same bandwidth adjustment parameter or different bandwidth adjustment parameters for the second service flows in a same time period. For example, when M=3, there is one first service flow, and there are two second service flows, if a bandwidth increase parameter for the first service flow is 0.2 Gbps, a bandwidth adjustment parameter for each of a second service flow that appears first and a second service flow that appears second may be a bandwidth decrease parameter, and the bandwidth decrease parameter is -0.1 Gbps. Alternatively, a bandwidth adjustment parameter for a second service flow that appears first may be a bandwidth decrease parameter, and the bandwidth decrease parameter is -0.2 Gbps; and a bandwidth adjustment parameter for a second service flow that appears second may be 0, that is, bandwidth of the second service flow that appears second is kept the same as bandwidth, in the first bandwidth allocation information, for the second service flow.

In an implementation, a specific implementation of determining, by the network device, the first service flow based on the N utility value sets may be: The network device determines a first exploration time period from the N exploration time periods, obtains bandwidth adjustment parameters for all the service flows in the first exploration time period, and uses a service flow corresponding to a bandwidth adjustment parameter that is greater than 0 and that is in the bandwidth adjustment parameters for all the service flows in the first exploration time period as the first service flow. The first exploration time period corresponds to a first utility value set in the N utility value sets, and a sum of all utility values in the first utility value set is greater than a sum of all utility values in any utility value set other than the first utility value set in the N utility value sets.

Specifically, after obtaining the N utility value sets, the network device may determine a sum of all utility values in each utility value set, and use a utility value set with a largest sum of utility values as the first utility value set, and then may determine the first exploration time period corresponding to the first utility value set based on the one-to-one correspondence between the utility value set and the exploration time period. That a sum of all utility values in the first utility value set is the largest may indicate that network utility obtained after bandwidth of each service flow is adjusted in the first exploration time period is higher than network utility obtained after the bandwidth of each service flow is adjusted in any exploration time period other than the first exploration time period in the N exploration time periods. In other words, maximization of the network utility is facilitated if each service flow is further adjusted based on a bandwidth adjustment direction for each service flow in the first exploration time period. The bandwidth adjustment direction may include bandwidth increase or bandwidth decrease.

The service flow corresponding to the bandwidth adjustment parameter that is greater than 0 and that is in the bandwidth adjustment parameters for all the service flows in the first exploration time period is a service flow whose bandwidth is to be increased in the first exploration time period. After determining the first exploration time period, the network device may use the service flow corresponding to the bandwidth adjustment parameter that is greater than 0 and that is in the bandwidth adjustment parameters for all the service flows in the first exploration time period as the first service flow, and use a service flow other than the first service flow in the M service flows as the second service flow. In this embodiment of this application, the network device may increase bandwidth of at least one service flow in each exploration time period. Therefore, in this case, there may be one or more first service flows and one or more second service flows. After the first service flow and the second service flow are determined, it indicates that the network device determines the bandwidth adjustment direction for each service flow in the first exploration time period. A bandwidth adjustment direction for the first service flow is bandwidth increase, and a bandwidth adjustment direction for the second service flow is bandwidth decrease.

Step S303: The network device determines second bandwidth adjustment information of all the service flows in the first decision period based on the first bandwidth adjustment information and the bandwidth adjustment result, where the second bandwidth adjustment information includes a first bandwidth adjustment parameter and a second bandwidth adjustment parameter, the first bandwidth adjustment parameter is a bandwidth adjustment parameter for the first service flow in the first decision period, the second bandwidth adjustment parameter is a bandwidth adjustment parameter for the second service flow in the first decision period, and the M service flows include the first service flow and the second service flow.

The first bandwidth adjustment parameter may be a bandwidth increase parameter, and the second bandwidth adjustment parameter may be a bandwidth decrease parameter or 0. The bandwidth increase parameter may further indicate a bandwidth value or a bandwidth proportion added for the first service flow based on the first bandwidth allocation information. Similarly, the bandwidth decrease parameter may further indicate a bandwidth value or a bandwidth proportion subtracted for the second service flow based on the first bandwidth allocation information.

Specifically, the bandwidth adjustment parameter (namely, the first bandwidth adjustment parameter) for the first service flow in the first decision period may be greater than a bandwidth adjustment parameter for the first service flow in the first exploration time period. When there are a plurality of first service flows, a bandwidth adjustment parameter for each first service flow in the first decision period is greater than a bandwidth adjustment parameter for the first service flow in the first exploration time period. For example, when bandwidth adjustment parameters for a first service flow 1 and a first service flow 2 in the first exploration time period are 0.2 Gbps and 0.1 Gbps respectively, bandwidth adjustment parameters for the first service flow 1 and the first service flow 2 in the first decision period may be 0.3 Gbps and 0.2 Gbps respectively. In an implementation, if the bandwidth adjustment parameter for the first service flow 1 is greater than the bandwidth adjustment parameter for the first service flow 2 in the first exploration time period, the bandwidth adjustment parameter for the first service flow 1 may be greater than the bandwidth adjustment parameter for the first service flow 2 in the first decision period.

When there is one second service flow, a bandwidth adjustment parameter for the second service flow in each of the first decision period and the first exploration time period is a bandwidth decrease parameter, and a bandwidth decrease parameter (namely, the second bandwidth adjustment parameter) for the second service flow in the first decision period is less than a bandwidth decrease parameter for the second service flow in the first exploration time period. For example, when the bandwidth decrease parameter for the second service flow in the first exploration time period is -0.2 Gbps, the bandwidth decrease parameter for the second service flow in the first decision period may be -0.3 Gbps. It should be noted that in each exploration period, a sum of bandwidth adjustment parameters for all of the M service flows is 0.

When there are a plurality of second service flows, if a bandwidth adjustment parameter for each second service flow in the first exploration time period is a bandwidth decrease parameter, a bandwidth adjustment parameter (namely, the second bandwidth adjustment parameter) for the second service flow in the first decision period may still be a bandwidth decrease parameter, and the bandwidth decrease parameter for the second service flow in the first decision period may be less than the bandwidth decrease parameter for the second service flow in the first exploration time period. If the bandwidth adjustment parameter for the second service flow in the first exploration time period is 0, the bandwidth adjustment parameter for the second service flow in the first decision period may be 0, a bandwidth decrease parameter, or a bandwidth increase parameter.

It should be noted that for a remaining process of performing step S303, refer to the specific description of step S202 in FIG. 2. Details are not described herein.

Step S304: The network device adjusts the first service flow based on the first bandwidth adjustment parameter, and adjusts the second service flow based on the second bandwidth adjustment parameter.

In this embodiment of this application, a specific implementation of adjusting, by the network device, the first service flow based on the first bandwidth adjustment parameter, and adjusting the second service flow based on the second bandwidth adjustment parameter may be: adjusting bandwidth allocation information, in the first bandwidth allocation information, for the first service flow based on the first bandwidth adjustment parameter, and adjusting bandwidth allocation information, in the first bandwidth allocation information, for the second service flow based on the second bandwidth adjustment parameter. The first bandwidth allocation information is bandwidth allocation information for the M service flows in a second decision period. The second decision period is a decision period in a previous control period of a control period to which the first decision period belongs.

In an implementation, after obtaining the first bandwidth adjustment information and the bandwidth adjustment result of all of the M service flows in the first exploration period, the network device may further obtain a reference utility sum in the first decision period, where the reference utility sum in the first decision period is a sum of utility values of the M service flows in the second decision period; and if a sum of all utility values in at least one of the N utility value sets is greater than or equal to the reference utility sum, trigger the step of determining the first service flow based on the N utility value sets.

When the sum of all the utility values in the at least one of the N utility value sets is greater than or equal to the reference utility sum, it indicates that the N exploration time periods include at least one exploration time period, and the network utility may be improved if the bandwidth of each of the M service flows is adjusted in the exploration time period. In other words, in the first decision period, maximization of the network utility is facilitated if the bandwidth of each service flow continues to be adjusted based on a bandwidth adjustment direction for each service flow in the exploration time period. Therefore, the network device needs to determine the first service flow, and then increases the bandwidth of the first service flow in the first decision period, to improve network utility in the first decision period. In this manner, a case in which the bandwidth allocation information for the M service flows is adjusted when the network utility of a network is already maximized in the second decision period (namely, a previous decision period of the first decision period), in other words, when the bandwidth allocation information for the M service flows does not need to be adjusted, may be avoided, to help save resources.

In an implementation, if a sum of all utility values in each of the N utility value sets is less than the reference utility sum, the bandwidth allocation information for the M service flows in the second decision period is obtained, and the bandwidth allocation information is used as bandwidth allocation information for the M service flows in the first decision period. When the sum of all the utility values in each of the N utility value sets is less than the reference utility sum, it indicates that the network utility cannot be improved when the bandwidth of each of the M service flows is adjusted in each of the N exploration time periods. In other words, currently, the network utility of the network is already maximized, and the maximum network utility is the sum of the utility values of the M service flows in the second decision period, in other words, the bandwidth allocation information for the M service flows in the second decision period is bandwidth allocation information that maximizes the network utility.

During implementation of this embodiment of this application, the first service flow may be determined based on the N utility value sets, and the bandwidth of the first service flow is further increased, to help maximize the network utility.

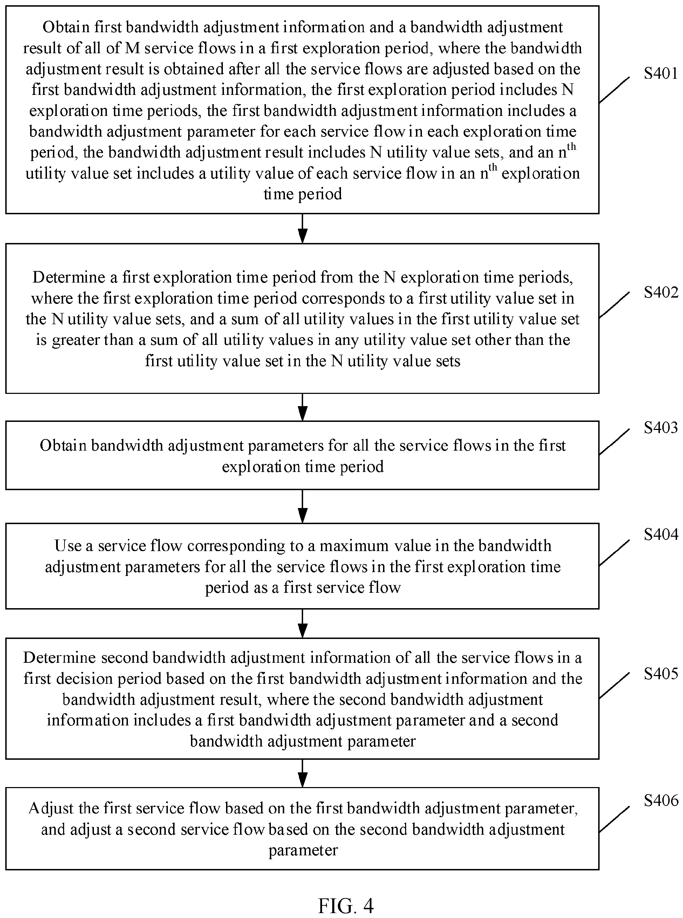

FIG. 4 is a schematic flowchart of still another data processing method according to an embodiment of this application. In the method, how to determine a first service flow from M service flows based on a bandwidth adjustment parameter for each service flow in a first exploration time period is described in detail. Step S401 to step S406 are performed by a network device or a chip in a network device. Description is provided below by using an example in which the data processing method is performed by the network device. The method may include but is not limited to the following steps.

Step S401: The network device obtains first bandwidth adjustment information and a bandwidth adjustment result of all of the M service flows in a first exploration period, where the bandwidth adjustment result is obtained after all the service flows are adjusted based on the first bandwidth adjustment information, the first exploration period includes N exploration time periods, the first bandwidth adjustment information includes a bandwidth adjustment parameter for each service flow in each exploration time period, the bandwidth adjustment result includes N utility value sets, an $n^{th}$ utility value set includes a utility value of each service flow in an $n^{th}$ exploration time period, M and N are integers greater than or equal to 2, $1 \leq n \leq N$, and $M \leq N$.

Step S402: The network device determines the first exploration time period from the N exploration time periods, where the first exploration time period corresponds to a first utility value set in the N utility value sets, and a sum of all utility values in the first utility value set is greater than a sum of all utility values in any utility value set other than the first utility value set in the N utility value sets.

Step S403: The network device obtains bandwidth adjustment parameter for all the service flows in the first exploration time period.

It should be noted that for a process of performing step S401, refer to the specific description of step S301 in FIG. 3a. For a process of performing step S402 and step S403, refer to the specific description of step S302 in FIG. 3a. Details are not described herein.

Step S404: The network device uses a service flow corresponding to a maximum value in the bandwidth adjustment parameters for all the service flows in the first exploration time period as the first service flow.

Specifically, after determining the first exploration time period, the network device may use the service flow corresponding to the maximum value in the bandwidth adjustment parameters for all the service flows in the first exploration time period as the first service flow. In an implementation, when M=N, the network device may increase bandwidth of one service flow in each exploration time period, and increase bandwidth of different service flows in different exploration time periods. In this case, the network device may use the service flow corresponding to the maximum value in the bandwidth adjustment parameters for all the service flows in the first exploration time period as the first service flow, and there is one first service flow. When M<N, the network device may increase bandwidth of at least one service flow in each exploration time period, and increase bandwidth of different service flows in different exploration time periods. In this case, the network device may use a service flow corresponding to a bandwidth adjustment parameter that is greater than 0 and that is in the bandwidth adjustment parameters for all the service flows in the first exploration time period as the first service flow, and there may be one or more first service flows. After determining the first service flow, the network device may further increase bandwidth of the first service flow, to help maximize network utility.

Step S405: The network device determines second bandwidth adjustment information of all the service flows in a first decision period based on the first bandwidth adjustment information and the bandwidth adjustment result, where the second bandwidth adjustment information includes a first bandwidth adjustment parameter and a second bandwidth adjustment parameter, the first bandwidth adjustment parameter is a bandwidth adjustment parameter for the first service flow in the first decision period, the second bandwidth adjustment parameter is a bandwidth adjustment parameter for a second service flow in the first decision period, and the M service flows include the first service flow and the second service flow.

In an implementation, a specific implementation of determining, by the network device, the second bandwidth adjustment information of all the service flows in the first decision period based on the first bandwidth adjustment information and the bandwidth adjustment result may be: determining the first bandwidth adjustment parameter and the second bandwidth adjustment parameter based on a utility value of the first service flow in the first exploration time period and a bandwidth adjustment parameter for the first service flow in the first exploration time period. Specifically, the network device may first determine the first bandwidth adjustment parameter based on the utility value of the first service flow in the first exploration time period and the bandwidth adjustment parameter for the first service flow in the first exploration time period, and then determine the second bandwidth adjustment parameter based on the first bandwidth adjustment parameter.

In this embodiment of this application, the network device may determine, by increasing bandwidth of a different service flow (and correspondingly decreasing bandwidth of another service flow, or keeping bandwidth of some service flows unchanged) in each exploration time period and based on a sum of all utility values in a utility value set corresponding to each exploration time period, a manner of adjusting each of the M service flows in a decision period in a control period to which the exploration time period belongs, to help maximize the network utility. Through exploration in a plurality of control periods, the network device may maximize the network utility. It is assumed that M=3. In this case, based on first bandwidth allocation information, the network utility may be maximized if 0.4 Gbps is added for the first service flow. It may be understood that the network utility may be more quickly maximized if bandwidth added by the network device for the first service flow in the first decision period is closer to 0.4 Gbps. However, if the bandwidth added by the network device for the first service flow in the first decision period exceeds 0.4 Gbps, the efficiency of maximizing the network utility may be reduced.

Briefly, how to maximize the network utility may be considered as a convex optimization problem, and bandwidth adjustment information, of the M service flows, that corresponds to a case in which the network utility is maximized may be considered as a solution to the convex optimization problem. When convex optimization converges, the solution to the convex optimization problem is obtained. If an excessively small bandwidth value (or bandwidth proportion) is added by the network device for the first service flow in the first decision period, the convex optimization problem may converge at a relatively low speed. If an excessively large bandwidth value (or bandwidth proportion) is added by the network device for the first service flow in the first decision period, the solution to the convex optimization problem may be missed.

In an implementation, a specific implementation of determining, by the network device, the first bandwidth adjustment parameter based on the utility value of the first service flow in the first exploration time period and the bandwidth adjustment parameter for the first service flow in the first exploration time period may be: determining a first value based on the utility value of the first service flow in the first exploration time period and the bandwidth adjustment parameter for the first service flow in the first exploration time period; and if the first value is less than or equal to a preset threshold, using the first value as the first bandwidth adjustment parameter. In this embodiment of this application, if the network device adjusts the first service flow based on the first bandwidth adjustment parameter that is greater than the first value, the efficiency of maximizing the network utility may be reduced, or the network utility may not be maximized. Therefore, when the first value is less than or equal to the preset threshold, the network device uses the first value as the first bandwidth adjustment parameter, and adjusts the first service flow based on the first bandwidth adjustment parameter, to help ensure that the network utility is maximized. In an implementation, the preset threshold may be set by default by the network device, or may be an empirical value set by a user. For example, after a simulation test is performed, the preset threshold may be any value in 0.03 to 0.09.

In an implementation, if the first value is greater than the preset threshold, the network device may use the preset threshold as the first bandwidth adjustment parameter. In this manner, this helps ensure that the network utility is maximized.

In an implementation, the first value may be determined based on a second value and a third value; the second value may be a difference between the utility value of the first service flow in the first exploration time period and a utility value of the first service flow in any exploration time period other than the first exploration time period in the N exploration time periods; and the third value may be a difference between the bandwidth adjustment parameter for the first service flow in the first exploration time period and a bandwidth adjustment parameter for the first service flow in the any exploration time period other than the first exploration time period in the N exploration time periods.

In an implementation, the first value may be a ratio of the second value to the third value. Alternatively, the first value may be a product of a ratio of the second value to the third value and a preset value. The ratio of the second value to the third value may represent a degree to which the network utility is improved and that is obtained after unit bandwidth is added for the first service flow, and the preset value may affect sensitivity of the first value to a change of the network utility. For example, a larger preset value indicates a larger first value determined based on the preset value (when the first value is less than or equal to the preset threshold), and correspondingly a higher degree to which the network utility is improved, namely, higher sensitivity of the first value to the change of the network utility.

In an implementation, the first value may be obtained after normalization processing is performed on a ratio of the second value to the third value, or the first value may be obtained after normalization processing is performed on a product of a ratio of the second value to the third value and a preset value. When the product of the ratio of the second value to the third value and the preset value is $\Delta r$, and a utility function corresponding to the first service flow is $U(x)$, a specific implementation of performing, by the network device, normalization processing on $\Delta r$, to obtain the first value may be: The network device obtains a difference between a maximum function value $U_{max}(x)$ and a minimum function value $U_{min}(x)$ of the utility function $U(x)$ corresponding to the first service flow, and uses a ratio of $\Delta r$ to the difference as the first value. Herein, $U_{max}(x) = U(C_l)$, $U_{min}(x) = U(0)$, and $C_l$ is a link bandwidth capacity of a link $l$ on which the first service flow is located.

It should be noted that for a remaining process of performing step S405, refer to the specific description of step S303 in FIG. 3a. Details are not described herein.

Step S406: The network device adjusts the first service flow based on the first bandwidth adjustment parameter, and adjusts the second service flow based on the second bandwidth adjustment parameter.

It should be noted that for a process of performing step S406, refer to the specific description of step S304 in FIG. 3a. Details are not described herein.

During implementation of this embodiment of this application, the first exploration time period is determined from the N exploration time periods, and the service flow corresponding to the maximum value in the bandwidth adjustment parameters for all the service flows in the first exploration time period is used as the first service flow, to further increase the bandwidth of the first service flow, to help maximize the network utility.

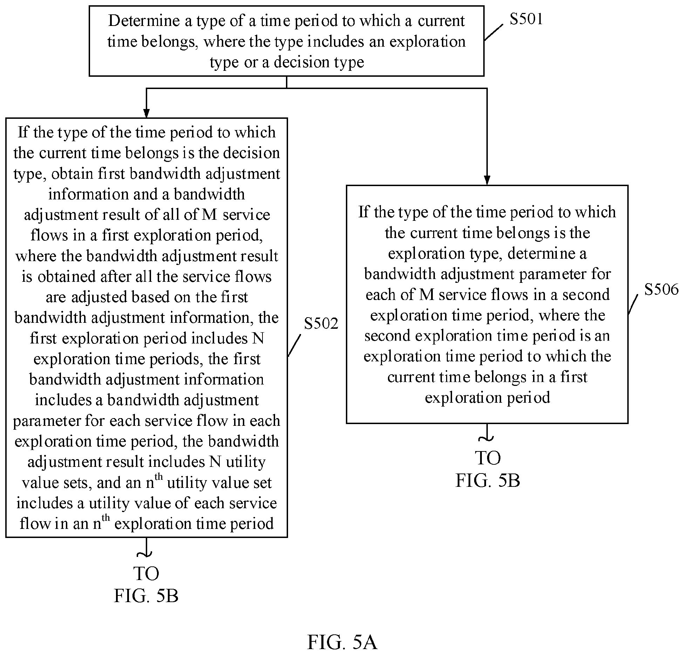

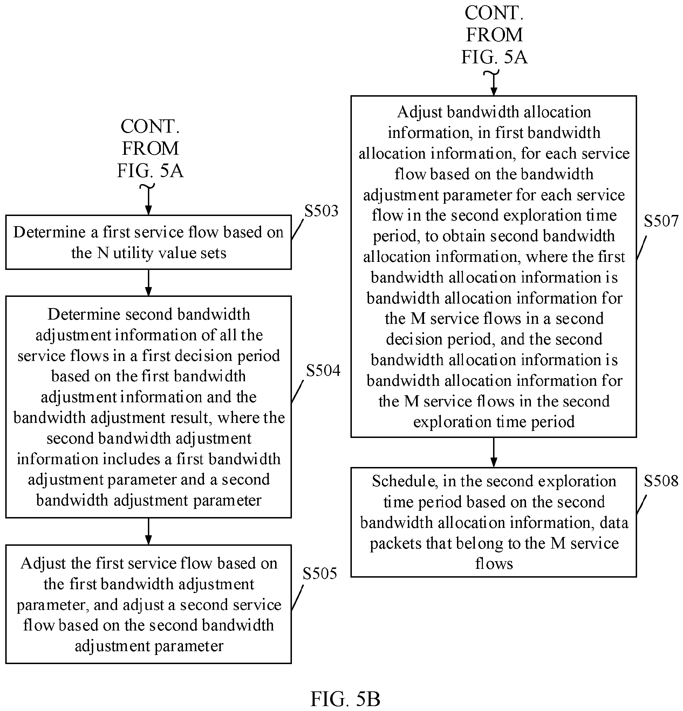

FIG. 5A and FIG. 5B are a schematic flowchart of still another data processing method according to an embodiment of this application. In the method, how to determine a type of a time period to which a current time belongs, and operations performed based on different time period types are described in detail. Step S501 to step S508 are performed by a network device or a chip in a network device. Description is provided below by using an example in which the data processing method is performed by the network device. The method may include but is not limited to the following steps.

Step S501: The network device determines the type of the time period to which the current time belongs, where the type includes an exploration type or a decision type, and each decision period includes one or more decision time periods.

Specifically, when duration of an exploration time period is the same as duration of the decision time period, the network device may determine a type of a current time period at a start time of each time period (an exploration time period or a decision time period), and perform different operations based on different types. Specifically, if the type of the current time period is the decision type, a first service flow needs to be determined, and then bandwidth of the first service flow is increased in a decision time period. In other words, if the type of the current time period is the decision type, the network device may trigger execution of step S301 to step S304 in FIG. 3a.

In an implementation, the network device may preset duration of each time period to T, and initialize a time to 0. In addition, the network device may use $\lfloor t/T \rfloor$ as a sequence number k of the time period to which the current time belongs. Herein, t may be the current time, and a value of the sequence number k of the time period starts from 0. In an implementation, if each decision period includes one decision time period, when k mod N = 0, it may indicate that the current time period is within a decision period, and the network device may trigger execution of step S502 to step S505. When k mod N ≠ 0, it may indicate that the current time period is within an exploration period, and the network device may trigger execution of step S506 to step S508.

Step S502: If the type of the time period to which the current time belongs is the decision type, the network device obtains first bandwidth adjustment information and a bandwidth adjustment result of all of M service flows in a first exploration period, where the bandwidth adjustment result is obtained after all the service flows are adjusted based on the first bandwidth adjustment information, the first exploration period includes N exploration time periods, the first bandwidth adjustment information includes a bandwidth adjustment parameter for each service flow in each exploration time period, the bandwidth adjustment result includes N utility value sets, an $n^{th}$ utility value set includes a utility value of each service flow in an $n^{th}$ exploration time period, M and N are integers greater than or equal to 2, $1 \leq n \leq N$, and $M \leq N$.

Step S503: The network device determines the first service flow based on the N utility value sets.

Step S504: The network device determines second bandwidth adjustment information of all the service flows in a first decision period based on the first bandwidth adjustment information and the bandwidth adjustment result, where the second bandwidth adjustment information includes a first bandwidth adjustment parameter and a second bandwidth adjustment parameter, the first bandwidth adjustment parameter is a bandwidth adjustment parameter for the first service flow in the first decision period, the second bandwidth adjustment parameter is a bandwidth adjustment parameter for a second service flow in the first decision period, and the M service flows include the first service flow and the second service flow.

Step S505: The network device adjusts the first service flow based on the first bandwidth adjustment parameter, and adjusts the second service flow based on the second bandwidth adjustment parameter.

It should be noted that for a process of performing step S502 to step S505, refer to the specific description of step S301 to step S304 respectively in FIG. 3a. Details are not described herein again.

Step S506: If the type of the time period to which the current time belongs is the exploration type, the network device determines a bandwidth adjustment parameter for each of M service flows in a second exploration time period, where the second exploration time period is an exploration time period to which the current time belongs in a first exploration period.

Specifically, if the type of the current time period is the exploration type, the network device may determine the bandwidth adjustment parameter for each of the M service flows in the second exploration time period at a start time of the current time period, then determine second bandwidth allocation information based on the bandwidth adjustment parameter and first bandwidth allocation information, and schedule, based on the second bandwidth allocation information, data packets that belong to the M service flows. For example, a bandwidth increase parameter or a bandwidth decrease parameter for each service flow in the second exploration time period is determined. The bandwidth increase (or decrease) parameter may be specifically a bandwidth value or a bandwidth proportion that is added (or subtracted). When the type of the current time period is the exploration type, the network device adjusts bandwidth allocation information for all the service flows, so that the network device determines, in a decision time period based on bandwidth allocation information determined in the exploration time period and correspondingly obtained network utility, a manner of adjusting bandwidth of each service flow, to maximize the network utility.

Step S507: The network device adjusts bandwidth allocation information, in the first bandwidth allocation information, for each service flow based on the bandwidth adjustment parameter for each service flow in the second exploration time period, to obtain the second bandwidth allocation information, where the first bandwidth allocation information is bandwidth allocation information for the M service flows in a second decision period, and the second bandwidth allocation information is bandwidth allocation information for the M service flows in the second exploration time period.

Step S508: The network device schedules, in the second exploration time period based on the second bandwidth allocation information, the data packets that belong to the M service flows.

In this embodiment of this application, the network device may schedule, by using a preset scheduling algorithm based on the second bandwidth allocation information, the data packets that belong to the M service flows. The preset scheduling algorithm may include a data center transmission control protocol (data center transmission control protocol, DCTCP), NUMFabric (fast and flexible bandwidth allocation in datacenters), or another scheduling algorithm.

In an implementation, if the type of the time period to which the current time belongs is the exploration type, the network device may obtain a utility function of each of the M service flows, and obtain an average rate of the service flow in the second exploration time period; determine a function value of the utility function of the service flow in the second exploration time period based on the average rate of the service flow in the second exploration time period; and use the function value of the utility function of the service flow in the second exploration time period as a utility value of the service flow in the second exploration time period. Specifically, if the type of the current time period is the exploration type, the network device may determine the utility value of each service flow in the second exploration time period at an end time of the current time period based on the average rate of each service flow in the second exploration time period and the utility function of each service flow. In an implementation, there may be different utility functions for different service flows.

During implementation of this embodiment of this application, a different step may be performed when the time period to which the current time belongs is of a different type. Specifically, when the type of the current time period is the exploration type, the network device adjusts the bandwidth allocation information for all the service flows, so that the network device determines, in the decision time period based on the bandwidth allocation information determined in the exploration time period and the correspondingly obtained network utility, the manner of adjusting the bandwidth of each service flow, to maximize the network utility.

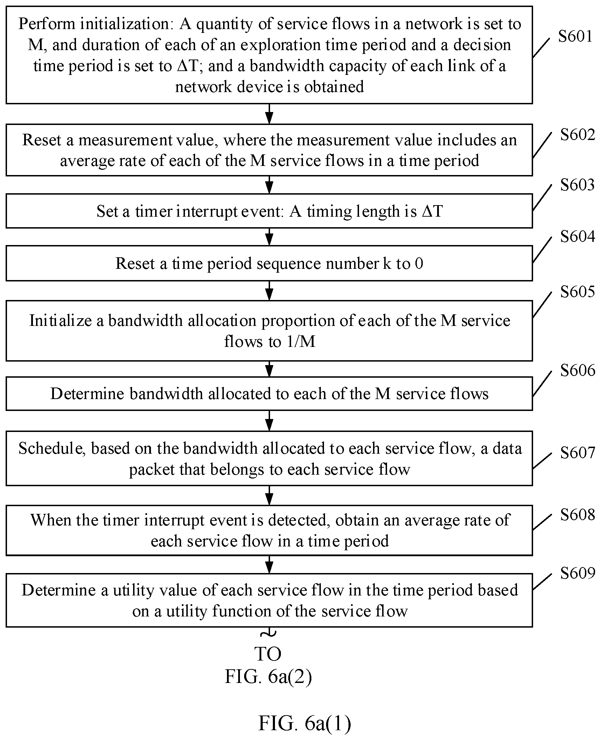

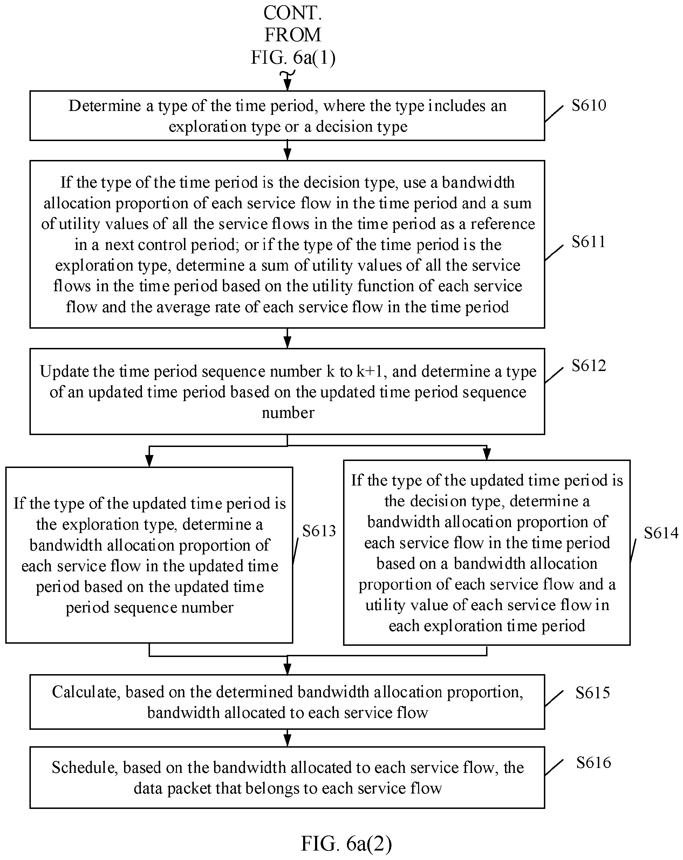

FIG. 6a(1) and FIG. 6a(2) are a schematic flowchart of still another data processing method according to an embodiment of this application. In the method, an initialization process of a network device and a complete process of determining bandwidth allocation information for service flows after initialization are described in detail. Step S601 to step S616 are performed by the network device or a chip in the network device. Description is provided below by using an example in which the data processing method is performed by the network device. The method may include but is not limited to the following steps.

Step S601: The network device performs initialization: A quantity of service flows in a network is set to M, and duration of each of an exploration time period and a decision time period is set to $\Delta T$; and a bandwidth capacity of each link of the network device is obtained.

Specifically, before performing the data processing method provided in this embodiment of this application, the network device may perform initialization. In an implementation, the network device may allocate a software controller to each egress link (namely, a port) of the network device based on a network topology, and initialize all software controllers. In an initialization process, steps performed by the network device may specifically include: setting the quantity of service flows in the network to M, and setting the duration of each of the exploration time period and the decision time period to $\Delta T$; and obtaining the bandwidth capacity $C_l$ of each link (namely, a link corresponding to each software controller) of the network device. Herein, M may be a maximum quantity that is of service flows included in the network and that is set by the network device based on experience. It should be noted that M set by the network device is the maximum quantity of service flows included in the network. In an actual case, a quantity of service flows received by the network device may be less than M.

Step S602: The network device resets a measurement value, where the measurement value includes an average rate of each of the M service flows in a time period.

The time period may be an exploration time period or a decision time period. In each time period, the network device may collect statistics on an average rate of each service flow in the time period, and then determine a utility value of each service flow in the time period based on the average rate of each service flow in the time period and a utility function of each service flow.

Step S603: The network device sets a timer interrupt event: A timing length is $\Delta T$.

In this embodiment of this application, the network device performs different operations in the exploration time period and the decision time period, and performs different operations at a start time and an end time of the exploration time period (or the decision time period). The network device sets the timing length of the timer interrupt event to be the same as a length of the time period, so that the timer interrupt event may be triggered at an end time of the time period, and then a corresponding operation may be performed based on a type of the time period that ends.

Step S604: The network device resets a time period sequence number k to 0.

The time period sequence number is updated with a processing process. The network device may determine, based on the time period sequence number (or an updated time period sequence number), whether a current time period is of an exploration type or a decision type, and then perform a corresponding operation. It should be noted that if the time period is of the exploration type, it may indicate that the time period is within an exploration period, and if the time period is of the decision type, it may indicate that the time period is within a decision period.

Step S605: The network device initializes a bandwidth allocation proportion of each of the M service flows to 1/M.

In this embodiment of this application, the network device may initialize bandwidth allocation information for the M service flows, for example, initialize the bandwidth allocation proportion $r_i(k\Delta T)$ of each of the M service flows to 1/M. The bandwidth allocation information may include a bandwidth value allocated to each service flow or the bandwidth allocation proportion, namely, a proportion of a bandwidth value allocated to each service flow, of each service flow. In this embodiment of this application, description is provided by using an example in which the bandwidth allocation information includes the bandwidth allocation proportion. It should be noted that a case in which the network device allocates bandwidth to all of the M service flows by using an equal proportion (in other words, the bandwidth proportion allocated to each service flow is 1/M, where i may be a number of a service flow, and is used to uniquely identify the service flow) is merely used as an example, and constitutes no limitation on this embodiment of this application. In another feasible implementation, the network device may alternatively allocate bandwidth to all the service flows by using different proportions. For example, when M=3, bandwidth allocation proportions of the three service flows are 1/6, 2/6, and 3/6.

Step S606: The network device determines bandwidth allocated to each of the M service flows.

The network device may determine a product of the bandwidth allocation proportion $r_i(k\Delta T)$ of each of the M service flows and the bandwidth capacity $C_l$ of the link of the network device as the bandwidth $B_i(k\Delta T)$ allocated to each service flow on the link.

Step S607: The network device schedules, based on the bandwidth allocated to each service flow, a data packet that belongs to each service flow.

In a process of scheduling, based on the bandwidth $B_i(k\Delta T)$ allocated to each service flow, the data packet that belongs to each service flow, the network device may determine whether the timer interrupt event is detected, and trigger execution of step S608 when the timer interrupt event is detected. In this embodiment of this application, the interrupt event may be triggered when each time period ends, and the network device may detect the interrupt event every time period.

Step S608: When detecting the timer interrupt event, the network device obtains an average rate of each service flow in a time period.

Step S609: The network device determines a utility value of each service flow in the time period based on the utility function of the service flow.

An independent variable of the utility function of each service flow may be an average rate of the service flow in a time period. The network device may use a function value of each service flow in the time period as the utility value of the service flow in the time period. It should be noted that at an end time of each of an exploration time period and a decision time period, the network device may calculate a utility value of each service flow in the time period. Specifically, a utility value of each service flow in the exploration time period may be used as a parameter used by the network device to determine the bandwidth allocation information for the M service flows in a decision time period. A utility value of each service flow in the decision time period may be used to determine a reference utility sum in a next decision period, and the network device may determine, based on the reference utility sum, whether bandwidth allocation needs to be adjusted in the next decision period based on bandwidth allocation information in a current decision period. If no adjustment needs to be made, in the next decision period, the network device may schedule, based on the bandwidth allocation information in the current decision period, the data packet that belongs to each service flow.

Step S610: The network device determines a type of the time period, where the type includes an exploration type or a decision type.

The time period is a time period that currently ends, and the network device may perform a different operation based on a different type of the time period. Specifically, a specific implementation of determining, by the network device, the type of the time period may be as follows: If *k mod N =0*, it indicates that the time period is a decision time period, in other words, the type of the time period is the decision type; or if *k mod N ≠ 0*, it indicates that the time period is an exploration time period, in other words, the type of the time period is the exploration type.

Step S611: If the type of the time period is the decision type, the network device uses a bandwidth allocation proportion of each service flow in the time period and a sum of utility values of all the service flows in the time period as a reference in a next control period; or if the type of the time period is the exploration type, the network device determines a sum of utility values of all the service flows in the time period based on the utility function of each service flow and the average rate of each service flow in the time period.

The bandwidth allocation proportion $r_i(k\Delta T)$ of each service flow in the time period is determined at a start time of the time period, and the utility value of each service flow in the time period is determined at an end time of the time period. That a bandwidth allocation proportion $r_i(k\Delta T)$ of each service flow in the time period is used as a reference in a next control period may indicate that in an exploration time period and a decision time period in the next control period, the network device adjusts the bandwidth allocation proportion of each service flow based on the bandwidth allocation proportion. That a sum $\sum_{i=1}^{M} U_i(x_i(k\Delta T))$ of utility values of all the service flows in the time period is used as a reference in a next control period may indicate that the network device adjusts the bandwidth allocation proportion of each service flow in the decision time period in the next control period only when the next control period includes at least one exploration time period, and a sum of utility values of all the service flows in the exploration time period is greater than or equal to $\sum_{i=1}^{M} U_i(x_i(k\Delta T))$. If a sum of utility values of all the service flows in each exploration time period in the next control period is less than $\sum_{i=1}^{M} U_i(x_i(k\Delta T))$, the network device may not need to adjust the bandwidth allocation proportion of each service flow in the decision time period in the next control period, in other words, network utility may be maximized if the data packet is scheduled based on a reference bandwidth allocation proportion in the next control period.

At an end time of each time period (an exploration time period or a decision time period that ends), the network device may obtain the average rate of each service flow in the time period through statistics collection. Correspondingly, the network device may determine a sum of utility values of all the service flows in the time period based on the utility function of each service flow and the average rate of each service flow in the time period, and store the sum of the utility values.

Step S612: The network device updates the time period sequence number k to k+1, and determines a type of an updated time period based on the updated time period sequence number.

After entering a new time period, the network device may update the time period sequence number, and then determine a type of the time period at a start time of the time period. Specifically, for an execution process of determining the type of the time period, refer to the specific description of step S610. Details are not described herein.

Step S613: If the type of the updated time period is the exploration type, the network device determines a bandwidth allocation proportion of each service flow in the updated time period based on the updated time period sequence number.

Specifically, if the type of the updated time period is the exploration type, at a start time of the updated exploration time period, the network may determine a service flow whose bandwidth needs to be increased (and another service flow whose bandwidth needs to be correspondingly decreased) in the exploration time period, and determine a bandwidth proportion to be added for the service flow. Then, the network device determines the bandwidth allocation proportion in the exploration time period based on a reference bandwidth allocation proportion in a current control period, and then performs step S615.

Step S614: If the type of the updated time period is the decision type, the network device determines a bandwidth allocation proportion of each service flow in the time period based on a bandwidth allocation proportion of each service flow and a utility value of each service flow in each exploration time period.

Specifically, if the type of the updated time period is the decision type, in other words, if the time period is a decision time period, the network device may determine, based on the bandwidth allocation proportion of each service flow and the utility value of each service flow in each exploration time period, a service flow whose bandwidth is to be increased in the decision time period, and determine a bandwidth proportion to be added for the service flow. Then, the network device determines the bandwidth allocation proportion in the decision time period based on a reference bandwidth allocation proportion in a current control period, and then performs step S615.

Step S615: The network device calculates, based on the determined bandwidth allocation proportion, bandwidth allocated to each service flow.

Step S616: The network device schedules, based on the bandwidth allocated to each service flow, the data packet that belongs to each service flow.

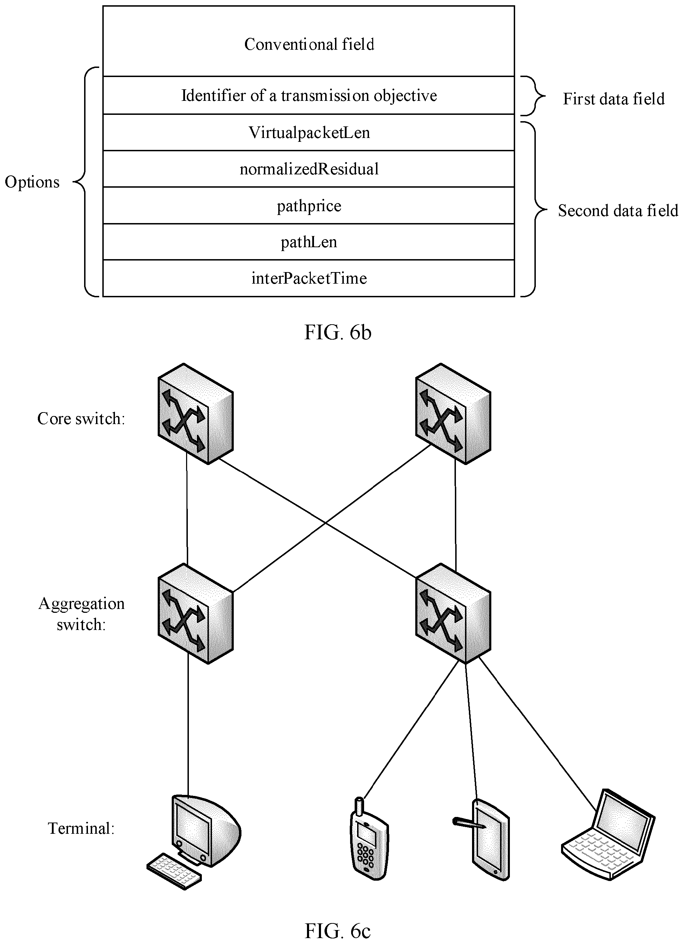

In this embodiment of this application, the network device may schedule, by using a preset scheduling algorithm based on the bandwidth $B_i(k\Delta T)$ allocated to each service flow, the data packet that belongs each service flow. Description is provided by using an example in which the preset scheduling algorithm is NUMFabric. A packet header of a data packet received by the network device may be shown in FIG. 6b.

In FIG. 6b, conventional fields may include but are not limited to the following fields: a source port number, a destination port number, a data sequence number, an acknowledgment sequence number, a header length, reserved, a control bit (CWR, ECE, URG, ACK, PSH, RST, SYN, and FIN), a window size, packet checksum, and an urgent pointer. In FIG. 6b, a field in a first data field may be a field used at a slow control layer, and a field in a second data field may be a field used at a fast control layer. The data packet may be grouped into a corresponding service flow by using an identifier of a transmission objective in the first data field. Identifiers of transmission objectives in packet headers of different data packets that belong to a same service flow may be the same. It should be noted that a case in which the first data field in FIG. 6b includes only one field (the identifier of the transmission objective) is merely used as an example, and constitutes no limitation on this embodiment of this application. In another feasible implementation, the first data field may further include another field. The identifier of the transmission objective may be determined based on the transmission objective of concern for the data packet in a transmission process. Specifically, when sending the data packet, a transmit end may set the identifier of the transmission objective in the packet header. Both CWR and ECE are used in an ECN field in an IP header. When ECE is 1, a peer end is indicated to narrow a congestion window. When URG is 1, it indicates that the packet includes data that needs to be urgently processed. When ACK is 1, an acknowledgment response field is valid. When PSH is 1, it indicates that received data needs to be immediately transmitted to an upper-layer application protocol. If PSH is 0, the data is buffered first. When RST is 1, it indicates that a TCP connection is abnormal, and needs to be forcibly ended. SYN is used to establish a connection. When this bit is set to 1, it indicates that a connection is to be established. When FIN is 1, it indicates that no data is sent in the future, and a connection is to be ended.

In FIG. 6b, VirtualpacketLen may represent duration in which the data packet stays in the network device, and the network device may determine, based on VirtualpacketLen in the packet header, a manner of scheduling the data packet. It should be noted that as the data packet is transmitted, VirtualpacketLen may remain unchanged. The network device may update a parameter in the network device based on normalizedResidual (for example, linkprice in a switch, and the switch may periodically update linkprice based on normalizedResidual). As the data packet is transmitted, normalizedResidual may remain unchanged. Each time the data packet passes through a hop, pathprice and pathLen may change. Herein, interPacketTime may represent a time difference between two adjacent data packets, and interPacketTime may be determined at a receive end.

In an implementation, different data fields in the second data field in FIG. 6b may be used in case of different preset scheduling algorithms. Before sending the data packet, the transmit end may set a data field that needs to be used for the used preset scheduling algorithm. For example, the preset scheduling algorithm is NUMFabric, and five data fields in the second data field need to be used for NUMFabric. The transmit end may initialize all data fields in the second data field. A specific initialization process may be as follows:

$$\text{VirtualPacketLen} = \frac{\text{L}_p}{\text{Price\_sum}}$$

$$\text{normalizedResidual} = \frac{U_i^{'}(x) - \text{Price\_sum}}{\text{hops}}$$

$$\text{Pathprice} = 0$$

$$\text{PathLen} = 0$$

$$\text{interPacketTime} = 0$$

Herein, $L_p$ may be a size of a to-be-sent data packet, Price_sum may be a sum that is of prices of paths and that is collected in a previous data packet, i in $U_i^{'}(x)$ may be used to identify a transmission objective of concern in a transmission process for the data packet to be sent by the transmit end, $U_i^{'}(x)$ may be a derivative of a utility function corresponding to the transmission objective, hops may be a quantity of hops through which the data packet passes from the transmit end to the receive end, and hops may be obtained through statistics collection by using a pathLen data field in another data packet returned from the receive end. In an implementation, after receiving the data packet, the network device may group the data packet into a corresponding service flow based on the identifier, recorded in the packet header, of the transmission objective of concern for the data packet in the transmission process, and control the data packet to enter a corresponding queue. After receiving the data packet, the network device may further correspondingly increase a measurement value corresponding to the service flow to which the data packet belongs. The measurement value is an average rate of the service flow in a time period. After determining the bandwidth $B_i(k\Delta T)$ allocated to each service flow, the network device may poll queues corresponding to all the service flows, and preferentially select a data packet with a small value of VirtualpacketLen from a queue being dequeued, to prepare for sending

In an implementation, a process of updating, by the network device, pathprice and pathLen in the packet header may be as follows: *PathPrice = PathPrice + link_price*, and *PathLen = PathLen* + 1. After updating is completed, the network device may forward the data packet to a next hop.

In an implementation, after receiving the data packet, the receive end may construct an ACK packet, copy some or all content in the first data field and the second data field in the data packet to a same bit field in an ACK packet header, set a value of interPacketTime, and then send the ACK packet to the network device. After receiving the returned ACK packet, the network device may directly forward the ACK packet. When receiving the ACK packet, the transmit end may update, based on a value of pathprice in the second data field and a utility function of the service flow to which the data packet corresponding to the ACK packet belongs, VirtualpacketLen in the packet header of the data packet that belongs to the service flow.

Step S617: The network device resets the measurement value, and restarts a timer.

In this embodiment of this application, after the network device obtains the measurement value, and determines a utility value of each service flow in a corresponding time period based on the measurement value, the network device may reset the measurement value to 0, to collect statistics on an average rate of each service flow in a next time period. After detecting the timer interrupt event, the network device may restart the timer, to wait for a next interrupt event.

In this embodiment of this application, in a control period, the network device explores different bandwidth allocation solutions in different exploration time periods, to determine network utility brought by the bandwidth allocation solutions, so that a bandwidth allocation solution in which higher network utility may be brought can be determined, and then a better bandwidth allocation solution can be determined based on the bandwidth allocation solution. In this manner, maximization of the network utility is facilitated.

The foregoing embodiments are described below by using an example and with reference to a network topology.

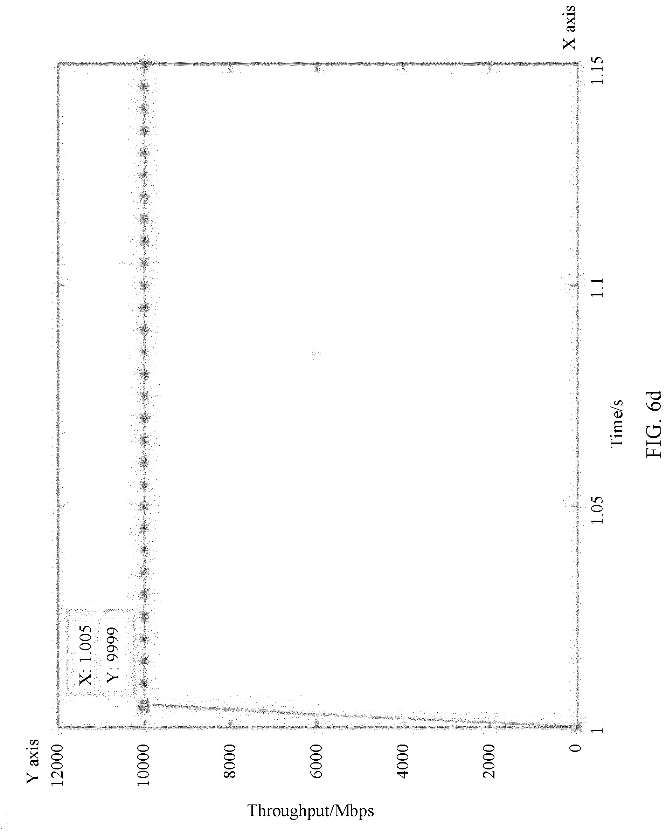

In Example 1, a network topology shown in FIG. 6c is used, three service flows are set in a network, and transmission objectives of the three service flows are proportional fairness, α fairness, and minimization of a flow completion time. A simulation result obtained by using an ns3 simulator may be shown in FIG. 6d. FIG. 6d is a schematic diagram of a throughput of a bottleneck link in a network shown in FIG. 6c. It may be learned from FIG. 6d that when the data processing method provided in embodiments of this application is used, the throughput of the bottleneck link remains unchanged at 9999 Mbps after 1.005s, in other words, the throughput of the bottleneck link quickly converges to a relatively large value. Therefore, the data processing method provided in embodiments of this application helps improve bandwidth utilization.

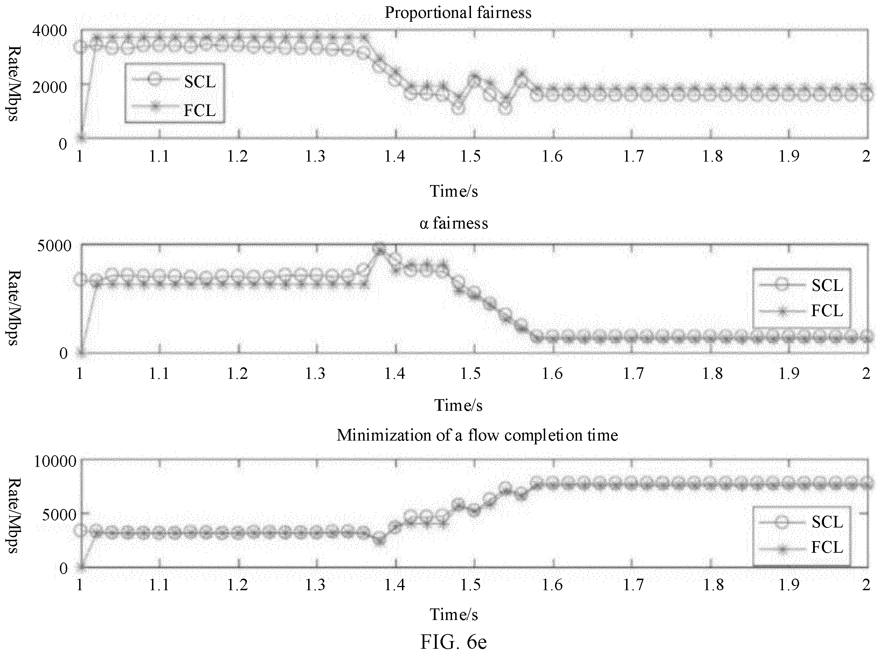

FIG. 6e is a schematic diagram of actual traffic obtained after a data packet is scheduled based on bandwidth allocation information, for service flows, that is determined by using the data processing method provided in embodiments of this application. SCL represents a bandwidth allocation result determined by using the data processing method provided in embodiments of this application, and FCL represents a result of actual network traffic generated after the data packet is scheduled by using the data processing method provided in embodiments of this application. Based on the results shown in FIG. 6e, it may indicate that by controlling data packets of different service flows to enter different isolated queues, mutual interference can be prevented from occurring when the data packet is scheduled. Therefore, after the data packet is scheduled by using the data processing method provided in embodiments of this application, the generated actual network traffic is almost the same as the determined bandwidth allocation result of the service flows.

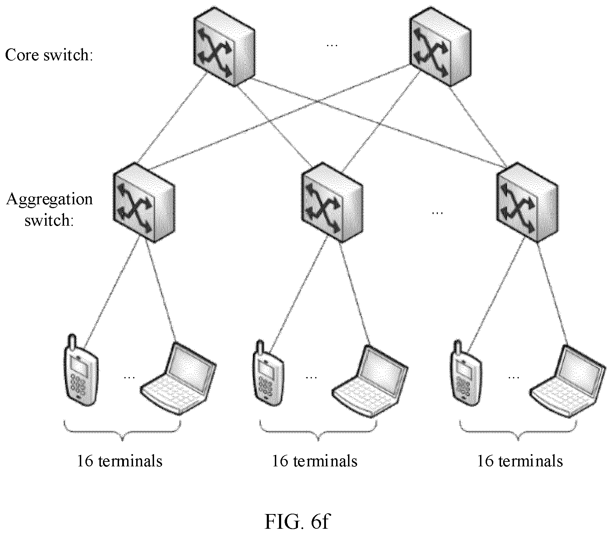

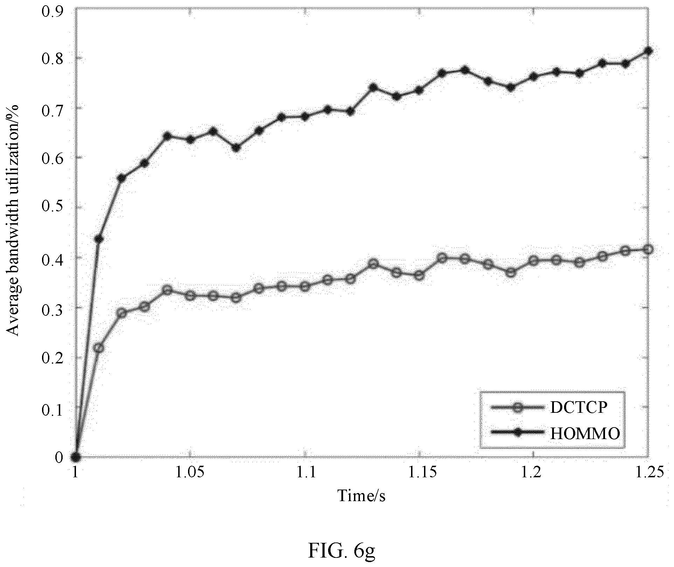

In Example 2, another network topology diagram shown in FIG. 6f is used, and a service flow setting is the same as that in Example 1. FIG. 6g is a comparison diagram of average bandwidth utilization that is of all links in a network shown in FIG. 6f and that exists when the data processing method provided in embodiments of this application and DCTCP are used. HOMMO represents the data processing method provided in embodiments of this application. It may be learned from FIG. 6g that average bandwidth utilization obtained by using HOMMO is much greater than average bandwidth utilization obtained by using DCTCP.

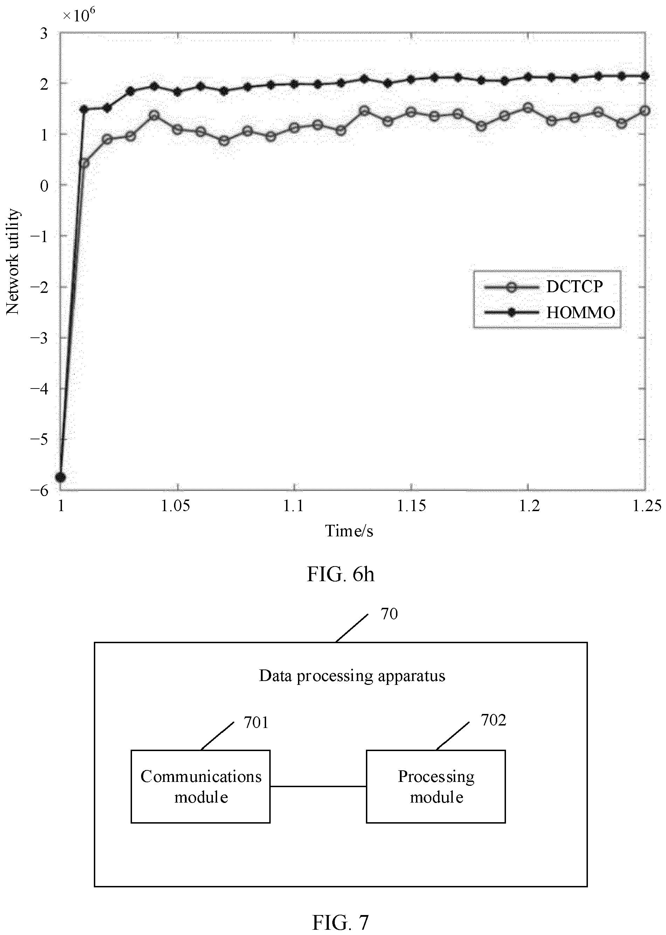

FIG. 6h is a comparison diagram of network utility that is correspondingly generated in a network topology shown in FIG. 6f and that exists when the data processing method (HOMMO) provided in embodiments of this application and DCTCP are used. It may be learned from FIG. 6h that network utility obtained by using HOMMO is higher than network utility obtained by using DCTCP.

The method disclosed in embodiments of this application is described in detail above, and an apparatus in embodiments of this application is provided below.

FIG. 7 is a schematic diagram of a structure of a data processing apparatus according to an embodiment of this application. The data processing apparatus may be a network device or an apparatus (for example, a chip) that has a function of a network device. The data processing apparatus 70 is configured to perform the steps performed by the network device in the method embodiments corresponding to FIG. 2 to FIG. 6a(1) and FIG. 6a(2). The data processing apparatus 70 may include:

a communications module 701, configured to receive M service flows; and

a processing module 702, configured to obtain first bandwidth adjustment information and a bandwidth adjustment result of all of the M service flows in a first exploration period. The bandwidth adjustment result is obtained after all the service flows are adjusted based on the first bandwidth adjustment information, and M is an integer greater than or equal to 2.

The processing module 702 is further configured to determine second bandwidth adjustment information of all the service flows in a first decision period based on the first bandwidth adjustment information and the bandwidth adjustment result.

The processing module 702 is further configured to adjust all the service flows based on the second bandwidth adjustment information.

In an implementation, when being configured to determine the second bandwidth adjustment information of all the service flows in the first decision period based on the first bandwidth adjustment information and the bandwidth adjustment result, the processing module 702 may be specifically configured to determine the second bandwidth adjustment information of all the service flows in the first decision period by using a machine learning algorithm based on the first bandwidth adjustment information and the bandwidth adjustment result.

In an implementation, the first exploration period may include N exploration time periods, the first bandwidth adjustment information may include a bandwidth adjustment parameter for each service flow in each exploration time period, the bandwidth adjustment result may include N utility value sets, an $n^{th}$ utility value set includes a utility value of each service flow in an $n^{th}$ exploration time period, N is an integer greater than or equal to 2, $1 \leq n \leq N$, $M \leq N$, the second bandwidth adjustment information includes a first bandwidth adjustment parameter and a second bandwidth adjustment parameter, the first bandwidth adjustment parameter is a bandwidth adjustment parameter for a first service flow in the first decision period, the second bandwidth adjustment parameter is a bandwidth adjustment parameter for a second service flow in the first decision period, and the M service flows include the first service flow and the second service flow; the processing module 702 may be further configured to determine the first service flow based on the N utility value sets; and when being configured to adjust all the service flows based on the second bandwidth adjustment information, the processing module 702 may be specifically configured to: adjust the first service flow based on the first bandwidth adjustment parameter, and adjust the second service flow based on the second bandwidth adjustment parameter.

In an implementation, when being configured to determine the first service flow based on the N utility value sets, the processing module 702 may be specifically configured to: determine a first exploration time period from the N exploration time periods, where the first exploration time period corresponds to a first utility value set in the N utility value sets, and a sum of all utility values in the first utility value set is greater than a sum of all utility values in any utility value set other than the first utility value set in the N utility value sets; obtain bandwidth adjustment parameters for all the service flows in the first exploration time period; and use a service flow corresponding to a maximum value in the bandwidth adjustment parameters for all the service flows in the first exploration time period as the first service flow.

In an implementation, when being configured to determine the second bandwidth adjustment information of all the service flows in the first decision period based on the first bandwidth adjustment information and the bandwidth adjustment result, the processing module 702 may be specifically configured to determine the first bandwidth adjustment parameter and the second bandwidth adjustment parameter based on a utility value of the first service flow in the first exploration time period and a bandwidth adjustment parameter for the first service flow in the first exploration time period.

In an implementation, when being configured to determine the first bandwidth adjustment parameter and the second bandwidth adjustment parameter based on the utility value of the first service flow in the first exploration time period and the bandwidth adjustment parameter for the first service flow in the first exploration time period, the processing module 702 may be specifically configured to: determine the first bandwidth adjustment parameter based on the utility value of the first service flow in the first exploration time period and the bandwidth adjustment parameter for the first service flow in the first exploration time period; and determine the second bandwidth adjustment parameter based on the first bandwidth adjustment parameter.

In an implementation, when being configured to determine the first bandwidth adjustment parameter based on the utility value of the first service flow in the first exploration time period and the bandwidth adjustment parameter for the first service flow in the first exploration time period, the processing module 702 may be specifically configured to: determine a first value based on the utility value of the first service flow in the first exploration time period and the bandwidth adjustment parameter for the first service flow in the first exploration time period; and if the first value is less than or equal to a preset threshold, use the first value as the first bandwidth adjustment parameter.

In an implementation, the processing module 702 may be further configured to: if the first value is greater than the preset threshold, use the preset threshold as the first bandwidth adjustment parameter.

In an implementation, the first value may be determined based on a second value and a third value; the second value may be a difference between the utility value of the first service flow in the first exploration time period and a utility value of the first service flow in any exploration time period other than the first exploration time period in the N exploration time periods; and the third value may be a difference between the bandwidth adjustment parameter for the first service flow in the first exploration time period and a bandwidth adjustment parameter for the first service flow in the any exploration time period other than the first exploration time period in the N exploration time periods.

In an implementation, when being configured to: adjust the first service flow based on the first bandwidth adjustment parameter, and adjust the second service flow based on the second bandwidth adjustment parameter, the processing module 702 may be specifically configured to: adjust bandwidth allocation information, in first bandwidth allocation information, for the first service flow based on the first bandwidth adjustment parameter, and adjust bandwidth allocation information, in the first bandwidth allocation information, for the second service flow based on the second bandwidth adjustment parameter. The first bandwidth allocation information is bandwidth allocation information for the M service flows in a second decision period.

In an implementation, the processing module 702 may be further configured to obtain a reference utility sum in the first decision period, where the reference utility sum in the first decision period is a sum of utility values of the M service flows in the second decision period; and the processing module 702 may be further configured to: if a sum of all utility values in at least one of the N utility value sets is greater than or equal to the reference utility sum, trigger execution of the step of determining the first service flow based on the N utility value sets.

In an implementation, the processing module 702 may be further configured to: if a sum of all utility values in each of the N utility value sets is less than the reference utility sum, obtain the bandwidth allocation information for the M service flows in the second decision period; and use the bandwidth allocation information as bandwidth allocation information for the M service flows in the first decision period.

In an implementation, the processing module 702 may be further configured to: determine a type of a time period to which a current time belongs, where the type includes an exploration type or a decision type, and each decision period includes one or more decision time periods; and if the type of the time period to which the current time belongs is the decision type, trigger the step of obtaining first bandwidth adjustment information and a bandwidth adjustment result of all of the M service flows in a first exploration period.

In an implementation, the processing module 702 may be further configured to: if the type of the time period to which the current time belongs is the exploration type, determine a bandwidth adjustment parameter for each service flow in a second exploration time period, where the second exploration time period is an exploration time period to which the current time belongs in the first exploration period; adjust bandwidth allocation information, in the first bandwidth allocation information, for each service flow based on the bandwidth adjustment parameter for each service flow in the second exploration time period, to obtain second bandwidth allocation information, where the first bandwidth allocation information is the bandwidth allocation information for the M service flows in the second decision period, and the second bandwidth allocation information is bandwidth allocation information for the M service flows in the second exploration time period; and schedule, in the second exploration time period based on the second bandwidth allocation information, data packets that belong to the M service flows.

In an implementation, the processing module 702 may be further configured to: if the type of the time period to which the current time belongs is the exploration type, obtain a utility function of each of the M service flows, and obtain an average rate of the service flow in a second exploration time period; determine a function value of the utility function of the service flow in the second exploration time period based on the average rate of the service flow in the second exploration time period; and use the function value of the utility function of the service flow in the second exploration time period as a utility value of the service flow in the second exploration time period.

In an implementation, there may be different utility functions for different service flows.

It should be noted that for content not mentioned in the embodiment corresponding to FIG. 7 and specific implementations of the steps performed by the modules, refer to embodiments shown in FIG. 2 to FIG. 6a(1) and FIG. 6a(2) and the foregoing content. Details are not described herein.

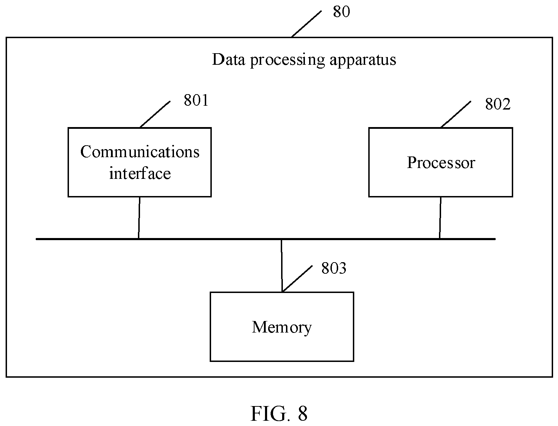

In an implementation, related functions implemented by the modules in FIG. 7 may be implemented through a combination of a processor and a communications interface. FIG. 8 is a schematic diagram of a structure of another data processing apparatus according to an embodiment of this application. The data processing apparatus may be a network device or an apparatus (for example, a chip) that has a function of a network device. The data processing apparatus 80 may include a communications interface 801, a processor 802, and a memory 803. The communications interface 801, the processor 802, and the memory 803 may be connected to each other by using one or more communications buses, or may be connected to each other in another manner. Related functions implemented by the communications module 701 and the processing module 702 shown in FIG. 7 may be implemented by a same processor 802, or may be implemented by a plurality of different processors 802.

The communications interface 801 may be configured to: send data and/or signaling, and receive data and/or signaling. In this embodiment of this application, the communications interface 801 may be configured to receive a data packet or send a data packet. The communications interface 801 may be a transceiver.

The processor 802 is configured to perform a corresponding function of the network device in the methods in FIG. 2 to FIG. 6a(1) and FIG. 6a(2). The processor 802 may include one or more processors. For example, the processor 802 may be one or more central processing units (central processing unit, CPU), one or more network processors (network processor, NP), one or more hardware chips, or any combination thereof. When the processor 802 is one CPU, the CPU may be a single-core CPU, or may be a multi-core CPU.

The memory 803 is configured to store program code and the like. The memory 803 may include a volatile memory (volatile memory), for example, a random access memory (random access memory, RAM). The memory 803 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 803 may further include a combination of the foregoing types of memories.

The processor 802 may invoke the program code stored in the memory 803, to enable the data processing apparatus 80 to perform the following operations:

obtaining first bandwidth adjustment information and a bandwidth adjustment result of all of M service flows in a first exploration period, where the bandwidth adjustment result is obtained after all the service flows are adjusted based on the first bandwidth adjustment information, and M is an integer greater than or equal to 2;

determining second bandwidth adjustment information of all the service flows in a first decision period based on the first bandwidth adjustment information and the bandwidth adjustment result; and

adjusting all the service flows based on the second bandwidth adjustment information.

In an implementation, when determining the second bandwidth adjustment information of all the service flows in the first decision period based on the first bandwidth adjustment information and the bandwidth adjustment result, the processor 802 may specifically perform the following operation: determining the second bandwidth adjustment information of all the service flows in the first decision period by using a machine learning algorithm based on the first bandwidth adjustment information and the bandwidth adjustment result.

In an implementation, the first exploration period may include N exploration time periods, the first bandwidth adjustment information may include a bandwidth adjustment parameter for each service flow in each exploration time period, the bandwidth adjustment result may include N utility value sets, an $n^{th}$ utility value set includes a utility value of each service flow in an $n^{th}$ exploration time period, N is an integer greater than or equal to 2, $1 \leq n \leq N$, $M \leq N$, the second bandwidth adjustment information includes a first bandwidth adjustment parameter and a second bandwidth adjustment parameter, the first bandwidth adjustment parameter is a bandwidth adjustment parameter for a first service flow in the first decision period, the second bandwidth adjustment parameter is a bandwidth adjustment parameter for a second service flow in the first decision period, and the M service flows include the first service flow and the second service flow; before determining the second bandwidth adjustment information of all the service flows in the first decision period based on the first bandwidth adjustment information and the bandwidth adjustment result, the processor 802 may further perform the following operation: determining the first service flow based on the N utility value sets; and when adjusting all the service flows based on the second bandwidth adjustment information, the processor 802 may specifically perform the following operation: adjusting the first service flow based on the first bandwidth adjustment parameter, and adjusting the second service flow based on the second bandwidth adjustment parameter.

In an implementation, when determining the first service flow based on the N utility value sets, the processor 802 may specifically perform the following operations: determining a first exploration time period from the N exploration time periods, where the first exploration time period corresponds to a first utility value set in the N utility value sets, and a sum of all utility values in the first utility value set is greater than a sum of all utility values in any utility value set other than the first utility value set in the N utility value sets; obtaining bandwidth adjustment parameters for all the service flows in the first exploration time period; and using a service flow corresponding to a maximum value in the bandwidth adjustment parameters for all the service flows in the first exploration time period as the first service flow.

In an implementation, when determining the second bandwidth adjustment information of all the service flows in the first decision period based on the first bandwidth adjustment information and the bandwidth adjustment result, the processor 802 may specifically perform the following operation: determining the first bandwidth adjustment parameter and the second bandwidth adjustment parameter based on a utility value of the first service flow in the first exploration time period and a bandwidth adjustment parameter for the first service flow in the first exploration time period.

In an implementation, when determining the first bandwidth adjustment parameter and the second bandwidth adjustment parameter based on the utility value of the first service flow in the first exploration time period and the bandwidth adjustment parameter for the first service flow in the first exploration time period, the processor 802 may specifically perform the following operations: determining the first bandwidth adjustment parameter based on the utility value of the first service flow in the first exploration time period and the bandwidth adjustment parameter for the first service flow in the first exploration time period; and determining the second bandwidth adjustment parameter based on the first bandwidth adjustment parameter.

In an implementation, when determining the first bandwidth adjustment parameter based on the utility value of the first service flow in the first exploration time period and the bandwidth adjustment parameter for the first service flow in the first exploration time period, the processor 802 may specifically perform the following operations: determining a first value based on the utility value of the first service flow in the first exploration time period and the bandwidth adjustment parameter for the first service flow in the first exploration time period; and if the first value is less than or equal to a preset threshold, using the first value as the first bandwidth adjustment parameter.

In an implementation, the processor 802 may further perform the following operation: if the first value is greater than the preset threshold, using the preset threshold as the first bandwidth adjustment parameter.

In an implementation, the first value may be determined based on a second value and a third value; the second value may be a difference between the utility value of the first service flow in the first exploration time period and a utility value of the first service flow in any exploration time period other than the first exploration time period in the N exploration time periods; and the third value may be a difference between the bandwidth adjustment parameter for the first service flow in the first exploration time period and a bandwidth adjustment parameter for the first service flow in the any exploration time period other than the first exploration time period in the N exploration time periods.

In an implementation, when adjusting the first service flow based on the first bandwidth adjustment parameter, and adjusting the second service flow based on the second bandwidth adjustment parameter, the processor 802 may specifically perform the following operation: adjusting bandwidth allocation information, in first bandwidth allocation information, for the first service flow based on the first bandwidth adjustment parameter, and adjusting bandwidth allocation information, in the first bandwidth allocation information, for the second service flow based on the second bandwidth adjustment parameter. The first bandwidth allocation information is bandwidth allocation information for the M service flows in a second decision period.

In an implementation, after obtaining the first bandwidth adjustment information and the bandwidth adjustment result of all of the M service flows in the first exploration period, the processor 802 may further perform the following operations: obtaining a reference utility sum in the first decision period, where the reference utility sum in the first decision period is a sum of utility values of the M service flows in the second decision period; and if a sum of all utility values in at least one of the N utility value sets is greater than or equal to the reference utility sum, triggering execution of the step of determining the first service flow based on the N utility value sets.

In an implementation, the processor 802 may further perform the following operations: if a sum of all utility values in each of the N utility value sets is less than the reference utility sum, obtaining the bandwidth allocation information for the M service flows in the second decision period; and using the bandwidth allocation information as bandwidth allocation information for the M service flows in the first decision period.

In an implementation, the processor 802 may further perform the following operations: determining a type of a time period to which a current time belongs, where the type includes an exploration type or a decision type, and each decision period includes one or more decision time periods; and if the type of the time period to which the current time belongs is the decision type, triggering the step of obtaining first bandwidth adjustment information and a bandwidth adjustment result of all of M service flows in a first exploration period.

In an implementation, the processor 802 may further perform the following operations: if the type of the time period to which the current time belongs is the exploration type, determining a bandwidth adjustment parameter for each service flow in a second exploration time period, where the second exploration time period is an exploration time period to which the current time belongs in the first exploration period; adjusting bandwidth allocation information, in the first bandwidth allocation information, for each service flow based on the bandwidth adjustment parameter for each service flow in the second exploration time period, to obtain second bandwidth allocation information, where the first bandwidth allocation information is the bandwidth allocation information for the M service flows in the second decision period, and the second bandwidth allocation information is bandwidth allocation information for the M service flows in the second exploration time period; and scheduling, in the second exploration time period based on the second bandwidth allocation information, data packets that belong to the M service flows.

In an implementation, the processor 802 may further perform the following operations: if the type of the time period to which the current time belongs is the exploration type, obtaining a utility function of each of the M service flows, and obtaining an average rate of the service flow in a second exploration time period; determining a function value of the utility function of the service flow in the second exploration time period based on the average rate of the service flow in the second exploration time period; and using the function value of the utility function of the service flow in the second exploration time period as a utility value of the service flow in the second exploration time period.

In an implementation, there may be different utility functions for different service flows.

Further, the processor 802 may further perform operations corresponding to the network device in embodiments shown in FIG. 2 to FIG. 6a(1) and FIG. 6a(2). For details, refer to the description in the method embodiments. Details are not described herein.

An embodiment of this application further provides a computer-readable storage medium that may be configured to store computer software instructions to be used by the data processing apparatus in the embodiment shown in FIG. 7. The computer software instructions include a program that is designed for the network device to perform the foregoing embodiments.

The computer-readable storage medium includes but is not limited to a flash memory, a hard disk drive, or a solid-state drive.

An embodiment of this application further provides a computer program product. When the computer product is run by a computing device, the methods designed for a network device in embodiments in FIG. 2 to FIG. 6a(1) and FIG. 6a(2) may be performed.

An embodiment of this application further provides a chip, including a processor and a memory. The memory is configured to store a computer program. The processor is configured to: invoke the computer program from the memory, and run the computer program. The computer program is used to implement the method in the foregoing method embodiments.

A person skilled in the art may be aware that in combination with the examples described in embodiments disclosed in this application, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

All or some of the foregoing embodiments may be implemented by using software, hardware, firmware, or any combination thereof. When software is used to implement embodiments, embodiments may be implemented completely or partially in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instruction may be stored in a computer-readable storage medium, or may be transmitted by using a computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive solid state disk (SSD)), or the like.

The foregoing description is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:

   obtaining first bandwidth adjustment information and a bandwidth adjustment result of all of M service flows in a first exploration period, wherein the bandwidth adjustment result is obtained after all the service flows are adjusted based on the first bandwidth adjustment information, and M is an integer greater than or equal to 2;
   determining second bandwidth adjustment information of all the service flows in a first decision period based on the first bandwidth adjustment information and the bandwidth adjustment result; and
   adjusting all the service flows based on the second bandwidth adjustment information.

2. The method according to claim 1, wherein the determining second bandwidth adjustment information of all the service flows in a first decision period based on the first bandwidth adjustment information and the bandwidth adjustment result comprises:
   determining the second bandwidth adjustment information of all the service flows in the first decision period by using a machine learning algorithm based on the first bandwidth adjustment information and the bandwidth adjustment result.

3. The method according to claim 1, wherein the first exploration period comprises N exploration time periods, the first bandwidth adjustment information comprises a bandwidth adjustment parameter for each service flow in each exploration time period, the bandwidth adjustment result comprises N utility value sets, an $n^{th}$ utility value set comprises a utility value of each service flow in an $n^{th}$ exploration time period, N is an integer greater than or equal to 2, $1 \leq n \leq N$, $M \leq N$, the second bandwidth adjustment information comprises a first bandwidth adjustment parameter and a second bandwidth adjustment parameter, the first bandwidth adjustment parameter is a bandwidth adjustment parameter for a first service flow in the first decision period, the second bandwidth adjustment parameter is a bandwidth adjustment parameter for a second service flow in the first decision period, and the M service flows comprise the first service flow and the second service flow;
before the determining second bandwidth adjustment information of all the service flows in a first decision period based on the first bandwidth adjustment information and the bandwidth adjustment result, the method further comprises:

> determining the first service flow based on the N utility value sets; and
> the adjusting all the service flows based on the second bandwidth adjustment information comprises:
> adjusting the first service flow based on the first bandwidth adjustment parameter, and adjusting the second service flow based on the second bandwidth adjustment parameter.

4. The method according to claim 3, wherein the determining the first service flow based on the N utility value sets comprises:

> determining a first exploration time period from the N exploration time periods, wherein the first exploration time period corresponds to a first utility value set in the N utility value sets, and a sum of all utility values in the first utility value set is greater than a sum of all utility values in any utility value set other than the first utility value set in the N utility value sets;
> obtaining bandwidth adjustment parameters for all the service flows in the first exploration time period; and
> using a service flow corresponding to a maximum value in the bandwidth adjustment parameters for all the service flows in the first exploration time period as the first service flow.

5. The method according to claim 4, wherein the determining second bandwidth adjustment information of all the service flows in a first decision period based on the first bandwidth adjustment information and the bandwidth adjustment result comprises:
determining the first bandwidth adjustment parameter and the second bandwidth adjustment parameter based on a utility value of the first service flow in the first exploration time period and a bandwidth adjustment parameter for the first service flow in the first exploration time period.

6. The method according to claim 5, wherein the determining the first bandwidth adjustment parameter and the second bandwidth adjustment parameter based on a utility value of the first service flow in the first exploration time period and a bandwidth adjustment parameter for the first service flow in the first exploration time period comprises:

> determining the first bandwidth adjustment parameter based on the utility value of the first service flow in the first exploration time period and the bandwidth adjustment parameter for the first service flow in the first exploration time period; and
> determining the second bandwidth adjustment parameter based on the first bandwidth adjustment parameter.

7. The method according to claim 6, wherein the determining the first bandwidth adjustment parameter based on the utility value of the first service flow in the first exploration time period and the bandwidth adjustment parameter for the first service flow in the first exploration time period comprises:

> determining a first value based on the utility value of the first service flow in the first exploration time period and the bandwidth adjustment parameter for the first service flow in the first exploration time period; and
> if the first value is less than or equal to a preset threshold, using the first value as the first bandwidth adjustment parameter.

8. The method according to claim 7, wherein the method further comprises:
if the first value is greater than the preset threshold, using the preset threshold as the first bandwidth adjustment parameter.

9. The method according to claim 7, wherein the first value is determined based on a second value and a third value, and the second value is a difference between the utility value of the first service flow in the first exploration time period and a utility value of the first service flow in any exploration time period other than the first exploration time period in the N exploration time periods; and
the third value is a difference between the bandwidth adjustment parameter for the first service flow in the first exploration time period and a bandwidth adjustment parameter for the first service flow in the any exploration time period other than the first exploration time period in the N exploration time periods.

10. The method according to claim 3, wherein the adjusting the first service flow based on the first bandwidth adjustment parameter, and adjusting the second service flow based on the second bandwidth adjustment parameter comprises: adjusting bandwidth allocation information, in first bandwidth allocation information, for the first service flow based on the first bandwidth adjustment parameter, and adjusting bandwidth allocation information, in the first bandwidth allocation information, for the second service flow based on the second bandwidth adjustment parameter, wherein the first bandwidth allocation information is bandwidth allocation information for the M service flows in a second decision period.

11. The method according to any one of claims 3 to 10, wherein after the obtaining first bandwidth adjustment information and a bandwidth adjustment result of all of M service flows in a first exploration period, the method further comprises:

obtaining a reference utility sum in the first decision period, wherein the reference utility sum in the first decision period is a sum of utility values of the M service flows in the second decision period; and
if a sum of all utility values in at least one of the N utility value sets is greater than or equal to the reference utility sum, triggering the step of determining the first service flow based on the N utility value sets.

12. The method according to claim 11, wherein the method further comprises:

if a sum of all utility values in each of the N utility value sets is less than the reference utility sum, obtaining the bandwidth allocation information for the M service flows in the second decision period; and
using the bandwidth allocation information as bandwidth allocation information for the M service flows in the first decision period.

13. The method according to any one of claims 3 to 10, wherein the method further comprises:

determining a type of a time period to which a current time belongs, wherein the type comprises an exploration type or a decision type, and each decision period comprises one or more decision time periods; and
if the type of the time period to which the current time belongs is the decision type, triggering the step of obtaining first bandwidth adjustment information and a bandwidth adjustment result of all of M service flows in a first exploration period.

14. The method according to claim 13, wherein the method further comprises:

if the type of the time period to which the current time belongs is the exploration type, determining a bandwidth adjustment parameter for each service flow in a second exploration time period, wherein the second exploration time period is an exploration time period to which the current time belongs in the first exploration period;
adjusting bandwidth allocation information, in the first bandwidth allocation information, for each service flow based on the bandwidth adjustment parameter for each service flow in the second exploration time period, to obtain second bandwidth allocation information, wherein the first bandwidth allocation information is the bandwidth allocation information for the M service flows in the second decision period, and the second bandwidth allocation information is bandwidth allocation information for the M service flows in the second exploration time period; and
scheduling, in the second exploration time period based on the second bandwidth allocation information, data packets that belong to the M service flows.

15. The method according to claim 13, wherein the method further comprises:

if the type of the time period to which the current time belongs is the exploration type, obtaining a utility function of each of the M service flows, and obtaining an average rate of the service flow in a second exploration time period;
determining a function value of the utility function of the service flow in the second exploration time period based on the average rate of the service flow in the second exploration time period; and
using the function value of the utility function of the service flow in the second exploration time period as a utility value of the service flow in the second exploration time period.

16. The method according to claim 15, wherein there are different utility functions for different service flows.

**17.** A data processing apparatus, comprising a unit configured to perform the method according to any one of claims 1 to 16.

**18.** A computer-readable storage medium, wherein the computer-readable storage medium stores a computer program, the computer program comprises program instructions, and when the program instructions are executed by a processor, the processor is enabled to perform the method according to any one of claims 1 to 16.

FIG. 1

Obtain first bandwidth adjustment information and a bandwidth adjustment result of all of M service flows in a first exploration period, where the bandwidth adjustment result is obtained after all the service flows are adjusted based on the first bandwidth adjustment information

S201

Determine second bandwidth adjustment information of all the service flows in a first decision period based on the first bandwidth adjustment information and the bandwidth adjustment result

S202

Adjust all the service flows based on the second bandwidth adjustment information

S203

FIG. 2

Obtain first bandwidth adjustment information and a bandwidth adjustment result of all of M service flows in a first exploration period, where the bandwidth adjustment result is obtained after all the service flows are adjusted based on the first bandwidth adjustment information, the first exploration period includes N exploration time periods, the first bandwidth adjustment information includes a bandwidth adjustment parameter for each service flow in each exploration time period, the bandwidth adjustment result includes N utility value sets, and an $n^{th}$ utility value set includes a utility value of each service flow in an $n^{th}$ exploration time period

S301

Determine a first service flow based on the N utility value sets

S302

Determine second bandwidth adjustment information of all the service flows in a first decision period based on the first bandwidth adjustment information and the bandwidth adjustment result, where the second bandwidth adjustment information includes a first bandwidth adjustment parameter and a second bandwidth adjustment parameter

S303

Adjust the first service flow based on the first bandwidth adjustment parameter, and adjust a second service flow based on the second bandwidth adjustment parameter

S304

FIG. 3a

FIG. 3b

Obtain first bandwidth adjustment information and a bandwidth adjustment result of all of M service flows in a first exploration period, where the bandwidth adjustment result is obtained after all the service flows are adjusted based on the first bandwidth adjustment information, the first exploration period includes N exploration time periods, the first bandwidth adjustment information includes a bandwidth adjustment parameter for each service flow in each exploration time period, the bandwidth adjustment result includes N utility value sets, and an $n^{th}$ utility value set includes a utility value of each service flow in an $n^{th}$ exploration time period

S401

Determine a first exploration time period from the N exploration time periods, where the first exploration time period corresponds to a first utility value set in the N utility value sets, and a sum of all utility values in the first utility value set is greater than a sum of all utility values in any utility value set other than the first utility value set in the N utility value sets

S402

Obtain bandwidth adjustment parameters for all the service flows in the first exploration time period

S403

Use a service flow corresponding to a maximum value in the bandwidth adjustment parameters for all the service flows in the first exploration time period as a first service flow

S404

Determine second bandwidth adjustment information of all the service flows in a first decision period based on the first bandwidth adjustment information and the bandwidth adjustment result, where the second bandwidth adjustment information includes a first bandwidth adjustment parameter and a second bandwidth adjustment parameter

S405

Adjust the first service flow based on the first bandwidth adjustment parameter, and adjust a second service flow based on the second bandwidth adjustment parameter

S406

FIG. 4

Determine a type of a time period to which a current time belongs, where the type includes an exploration type or a decision type — S501

If the type of the time period to which the current time belongs is the decision type, obtain first bandwidth adjustment information and a bandwidth adjustment result of all of M service flows in a first exploration period, where the bandwidth adjustment result is obtained after all the service flows are adjusted based on the first bandwidth adjustment information, the first exploration period includes N exploration time periods, the first bandwidth adjustment information includes a bandwidth adjustment parameter for each service flow in each exploration time period, the bandwidth adjustment result includes N utility value sets, and an $n^{th}$ utility value set includes a utility value of each service flow in an $n^{th}$ exploration time period — S502

If the type of the time period to which the current time belongs is the exploration type, determine a bandwidth adjustment parameter for each of M service flows in a second exploration time period, where the second exploration time period is an exploration time period to which the current time belongs in a first exploration period — S506

TO
FIG. 5B

TO
FIG. 5B

FIG. 5A

CONT.
FROM
FIG. 5A

Adjust bandwidth allocation information, in first bandwidth allocation information, for each service flow based on the bandwidth adjustment parameter for each service flow in the second exploration time period, to obtain second bandwidth allocation information, where the first bandwidth allocation information is bandwidth allocation information for the M service flows in a second decision period, and the second bandwidth allocation information is bandwidth allocation information for the M service flows in the second exploration time period | S507

CONT.
FROM
FIG. 5A

Determine a first service flow based on the N utility value sets | S503

Determine second bandwidth adjustment information of all the service flows in a first decision period based on the first bandwidth adjustment information and the bandwidth adjustment result, where the second bandwidth adjustment information includes a first bandwidth adjustment parameter and a second bandwidth adjustment parameter | S504

Adjust the first service flow based on the first bandwidth adjustment parameter, and adjust a second service flow based on the second bandwidth adjustment parameter | S505

Schedule, in the second exploration time period based on the second bandwidth allocation information, data packets that belong to the M service flows | S508

FIG. 5B

| Perform initialization: A quantity of service flows in a network is set to M, and duration of each of an exploration time period and a decision time period is set to $\Delta T$; and a bandwidth capacity of each link of a network device is obtained | S601 |

| Reset a measurement value, where the measurement value includes an average rate of each of the M service flows in a time period | S602 |

| Set a timer interrupt event: A timing length is $\Delta T$ | S603 |

| Reset a time period sequence number k to 0 | S604 |

| Initialize a bandwidth allocation proportion of each of the M service flows to 1/M | S605 |

| Determine bandwidth allocated to each of the M service flows | S606 |

| Schedule, based on the bandwidth allocated to each service flow, a data packet that belongs to each service flow | S607 |

| When the timer interrupt event is detected, obtain an average rate of each service flow in a time period | S608 |

| Determine a utility value of each service flow in the time period based on a utility function of the service flow | S609 |

TO

FIG. 6a(2)

FIG. 6a(1)

CONT.
FROM
FIG. 6a(1)

Determine a type of the time period, where the type includes an exploration type or a decision type — S610

If the type of the time period is the decision type, use a bandwidth allocation proportion of each service flow in the time period and a sum of utility values of all the service flows in the time period as a reference in a next control period; or if the type of the time period is the exploration type, determine a sum of utility values of all the service flows in the time period based on the utility function of each service flow and the average rate of each service flow in the time period — S611

Update the time period sequence number k to k+1, and determine a type of an updated time period based on the updated time period sequence number — S612

If the type of the updated time period is the exploration type, determine a bandwidth allocation proportion of each service flow in the updated time period based on the updated time period sequence number — S613

If the type of the updated time period is the decision type, determine a bandwidth allocation proportion of each service flow in the time period based on a bandwidth allocation proportion of each service flow and a utility value of each service flow in each exploration time period — S614

Calculate, based on the determined bandwidth allocation proportion, bandwidth allocated to each service flow — S615

Schedule, based on the bandwidth allocated to each service flow, the data packet that belongs to each service flow — S616

FIG. 6a(2)

FIG. 6b

FIG. 6c

FIG. 6d

Proportional fairness

α fairness

Minimization of a flow completion time

FIG. 6e

Core switch:

Aggregation
switch:

16 terminals          16 terminals          16 terminals

FIG. 6f

FIG. 6g

FIG. 6h

FIG. 7

80

Data processing apparatus

801

Communications interface

802

Processor

803

Memory

FIG. 8

## INTERNATIONAL SEARCH REPORT

| International application No. |
| --- |
| **PCT/CN2020/123406** |

| A. | CLASSIFICATION OF SUBJECT MATTER |
| --- | --- |

H04L 12/873(2013.01)i

According to International Patent Classification (IPC) or to both national classification and IPC

| B. | FIELDS SEARCHED |
| --- | --- |

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 带宽, 业务, 调整, 修改, 改变, 效用, 学习, bandwidth, service, modify, adjust, change, utility, learning

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106713169 A (NEUSOFT CORPORATION) 24 May 2017 (2017-05-24) description, paragraphs 67-106, 136-161 | 1, 2, 17, 18 |
| X | CN 101707807 A (ZTE CORPORATION) 12 May 2010 (2010-05-12) description, paragraphs 37-65 | 1, 2, 17, 18 |
| X | US 7885186 B2 (CIENA CORPORATION) 08 February 2011 (2011-02-08) claims 1-9, description, column 4 line 33 - column 7 line 33 | 1, 2, 17, 18 |
| A | US 8521889 B2 (AT & T Intellectual Property I, I.P.) 27 August 2013 (2013-08-27) entire document | 1-18 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 January 2021** | **13 January 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/123406**

| Patent document cited in search report | | | Publication date (day/month/year) | Patent family member(s) | | | Publication date (day/month/year) |
|---|---|---|---|---|---|---|---|
| CN | 106713169 | A | 24 May 2017 | CN | 106713169 | B | 13 August 2019 |
| CN | 101707807 | A | 12 May 2010 | CN | 101707807 | B | 28 November 2012 |
| US | 7885186 | B2 | 08 February 2011 | US | 2005073955 | A1 | 07 April 2005 |
| US | 8521889 | B2 | 27 August 2013 | US | 9294414 | B2 | 22 March 2016 |
| | | | | US | 2015149641 | A1 | 28 May 2015 |
| | | | | US | 2014059233 | A1 | 27 February 2014 |
| | | | | US | 8918514 | B2 | 23 December 2014 |
| | | | | US | 2004252698 | A1 | 16 December 2004 |

Form PCT/ISA/210 (patent family annex) (January 2015)

**EP 4 037 272 A1**

**Patent documents cited in the description**

- CN 201911020020